(19) Europäisches Patentamt / European Patent Office / Office européen des brevets

(11) **EP 4 601 232 A1**

(12) **EUROPEAN PATENT APPLICATION**
published in accordance with Art. 153(4) EPC

(43) Date of publication:
**13.08.2025 Bulletin 2025/33**

(21) Application number: **23896752.5**

(22) Date of filing: **27.11.2023**

(51) International Patent Classification (IPC):
**H04L 5/00** *(2006.01)*      **H04L 1/06** *(2006.01)*
**H04B 7/0456** *(2017.01)*

(52) Cooperative Patent Classification (CPC):
**H04B 7/0456; H04L 1/06; H04L 5/00**

(86) International application number:
**PCT/CN2023/134475**

(87) International publication number:
**WO 2024/114603 (06.06.2024 Gazette 2024/23)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **30.11.2022 CN 202211521114**

(71) Applicant: **ZTE CORPORATION**
**Shenzhen, Guangdong 518057 (CN)**

(72) Inventors:
• **YUAN, Zhifeng**
  **Shenzhen, Guangdong 518057 (CN)**
• **LI, Zhigang**
  **Shenzhen, Guangdong 518057 (CN)**
• **MA, Yihua**
  **Shenzhen, Guangdong 518057 (CN)**
• **LI, Weimin**
  **Shenzhen, Guangdong 518057 (CN)**

(74) Representative: **Carangelo, Pierluigi et al**
**Jacobacci & Partners S.p.A.**
**Via Tomacelli 146**
**00186 Roma (IT)**

(54) **INFORMATION TRANSMISSION METHOD AND APPARATUS, STORAGE MEDIUM AND ELECTRONIC APPARATUS**

(57)    An information transmission method and apparatus, a storage medium and an electronic apparatus. The method is applied to a terminal, and comprises: determining W ultra-sparse pilot frequencies, W being an integer greater than 0; and transmitting the W ultra-sparse pilot frequencies and target information to a cell-free system. The method solves the problem of lack of suitable pilot frequencies for use in cell-free systems in the prior art.

**Fig. 4**

Determining W ultra-sparse pilots, wherein W is an integer greater than 0 — S402

Transmitting the W ultra-sparse pilots and target information to a cell-free system — S404

## Description

### Cross-Reference to Related Application

The present disclosure claims priority to Chinese Patent Application No. 202211521114.1, filed with the China National Intellectual Property Administration (CNIPA) on November 30, 2022 and entitled "Information Transmission Method and Apparatus, Storage Medium and Electronic Apparatus", which is incorporated herein by reference in its entirety.

### Technical Field

Embodiments of the present disclosure relate to the field of communications, and in particular, to an information transmission method and apparatus, a storage medium and an electronic apparatus.

### Background

In a cell-free (meaning that there is no cell in a system or cells have been removed from the system) wireless communication system, by deploying a large number of low-cost APs over a wide area, the APs can be positioned closer to User Equipment (UE), thereby reducing path loss and ensuring more stable transmission signal strength of the UE in the whole network. Moreover, the numerous distributed APs are able to provide strong space domain multiplexing capabilities, meaning that the spatial channel correlation between different UEs and the numerous distributed APs is relatively low. As a result, the cell-free system is able to support multiple UEs communicating simultaneously on the same frequency in a simple and efficient manner. Essentially, a cell-free system with numerous distributed APs forms an Extremely Large Aperture Array (ELAA).

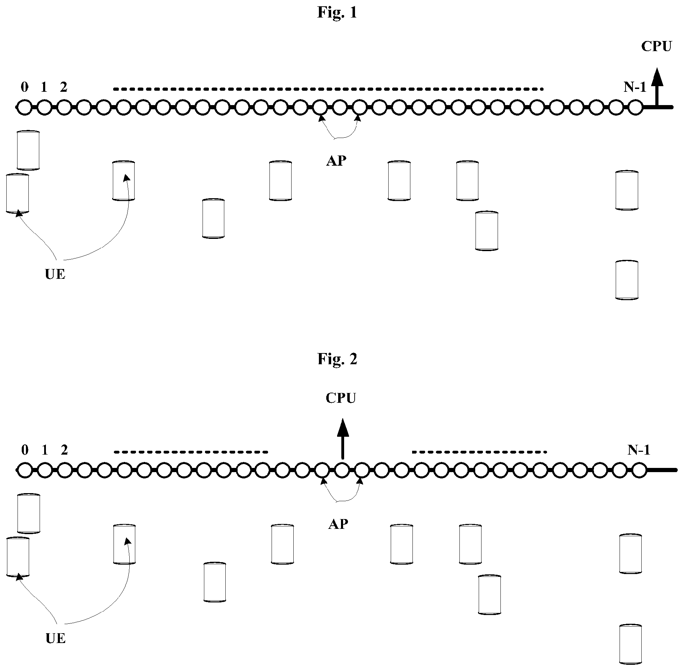

As illustrated in Fig. 1 and Fig. 2, the cell-free network includes a large number of APs, each represented by a circle in Fig. 1 and Fig. 2. Each AP may have one or more transceiver antennas. These APs are usually deployed in a distributed manner and are connected to a Central Processing Unit (CPU) in a certain connection mode (e.g., a certain topology). For instance, in Fig. 1, M APs are connected to the CPU via a radio stripe front haul. For another instance, in Fig. 2, a portion of the M APs is connected to the CPU via one radio stripe front haul, while the other portion of the M APs is connected to the CPU through another radio stripe front haul.

The transmission and reception of wireless signals in a cell-free network are accomplished through the APs. The uplink multi-user transmission can be explained using Fig. 1 as an example. We assume that K UEs transmits data to the cell-free network, and M APs are connected to the CPU through one radio stripe front haul. For simplification, it is assumed herein that each AP has only one reception antenna. Supposing that L symbols transmitted by each user undergo the same wireless channel, but symbols from different users undergo channels independent of each other, then, the L data

$$\mathbf{y}_m = \sum_{k=1}^{K} h_{mk}\mathbf{s}_k + \mathbf{n}_m$$

symbols received by APm are represented as: $\qquad$ ,

where $y_{\mathrm{m}} = [y_{m,1}, y_{m,2}, ... y_{m,L}]$ is a vector composed of the L data symbols received by APm, and is a row vector with the length L; $\mathbf{s}_k = [s_{k,1}, s_{k,2}, ... s_{k,L}]$ is a row vector composed of L data symbols transmitted by a UEk; $h_{mk}$ is a wireless channel from UEk to APm, and is a scalar; and $\mathbf{n}_m$ is Additive White Gaussian Noise (AWGN) on APm, and is a row vector with the length L.

Further, the signals received by the MAPs may be written as a matrix:

$$\mathbf{Y} = \sum_{k=1}^{K} \mathbf{h}_k\mathbf{s}_k + \mathbf{N} = \mathbf{HS} + \mathbf{N} \; ;$$

wherein $\mathbf{Y} = \begin{bmatrix} \mathbf{y}_1 \\ \mathbf{y}_2 \\ \vdots \\ \mathbf{y}_M \end{bmatrix}$ is a matrix with the dimension of M*L, which means that the matrix has M rows, and the m-th row

$$S = \begin{bmatrix} s_1 \\ s_2 \\ \vdots \\ s_K \end{bmatrix}$$

is represented as $y_m$; is a matrix with the dimension of L*L, and the m-th row is $y_m$:

$h_k = [h_{1,k}, h_{2,k}, \dots h_{M,k}]^T$ is a spatial channel vector from user k to the M APs, and is a column vector with the length M (having M rows); $H = [h_1, h_2, \dots h_K]$ is a matrix with the dimension of M*K; and the AWGN noise $N$ is a matrix with the dimension of M*L.

In a cell-free system based on the radio stripe front haul architecture, to reduce the bandwidth of the radio stripe front haul, it is typically not suggested to make each AP transmit its received signals to the CPU. If this is the case, the front haul link between the AP closest to the CPU and the CPU itself would need to handle the received data from all M APs, which would require a very large front haul bandwidth, especially since M is usually a large value. Therefore, to reduce the front haul bandwidth, a method based on conjugate combining is often used: each APm estimates a wireless channel $h_{mk}$

from UEk to APm using a reference signal from UEk, then weights the received data symbol $y_m$ with $h_{mk}^H$ (i.e., the

conjugate of $h_{mk}$) to obtain the data symbol $h_{mk}^H y_m$ related to user k, adds this data symbol $h_{mk}^H y_m$ with the data symbol

$\sum_{j=1}^{m-1} h_{jk}^H y_j$ related to user k received from the previous AP (i.e., APm-1) to obtain $\sum_{j=1}^{m} h_{jk}^H y_j$ which is equal to

$h_{mk}^H y_m + \sum_{j=1}^{m-1} h_{jk}^H y_j$, and finally transmits this accumulated signal $\sum_{j=1}^{m} h_{jk}^H y_j$ to the next AP (i.e., APm+1), and so forth.

Ultimately, the data symbol related to user k that the M-th AP transmits to the CPU is $\sum_{j=1}^{M} h_{jk}^* y_j$. At the CPU, the signal

$\sum_{j=1}^{M} h_{jk}^H y_j$ related to user k can also be expressed as $h_k^H Y$, where $h_k^H$ is the conjugate transpose of the $h_k$ vector.

The CPU receives the Mobile Radio Channel (MRC) data symbols for K users, which can collectively be written as $S_{MRC}=H^H Y$. It is evident that $S_{MRC}=H^H Y = H^H HS + H^H N$ obtained at the CPU represents a form of maximum ratio combining of the data symbols for K users. Due to the relatively low space domain correlation of channels from different UEs to the numerous distributed APs, the non-diagonal elements in the correlation matrix $H^H H$ are relatively small. Consequently, the cell-free system can efficiently support multiple UEs communicating simultaneously and on the same frequency, with minimal mutual interference.

The above-described space domain MRC reception method based on conjugate combining is relatively simple for each AP to handle: first, channel estimation for users is performed based on pilot signals, and then space domain MRC combining for the data symbols of the user can be implemented through simple multiplication and accumulation operations according to channels of different users; after that, the data symbol streams for the respective users obtained by the space domain MRC combining are sent to the next AP; thus, only the data symbol streams for K users obtained by the space domain MRC combining need to be transmitted on the front haul, and the received data symbol streams of M APs do not need to be transmitted. Since the number M of the APs in a cell-free system is usually much greater than the number M of UEs, this MRC reception method based on conjugate combining may greatly reduce the bandwidth requirements on the front haul.

In summary, a cell-free system based on the radio stripe front haul architecture can efficiently support space domain multiplexing of multiple UEs with a simple AP implementation and a small fronthaul bandwidth requirement, thus enabling low-cost deployment. Furthermore, due to the low spatial channel correlation provided by a large number of distributed APs, the mutual interference between different UEs may be relatively small. In addition, since UEs are usually close to the AP, the Signal-to-Interference plus Noise Ratio (SINR) of the data symbols of the UEs after space domain reception is relatively high, even under multi-user multiplexing. This means that multiple spatially multiplexed UEs have the potential to achieve high spectral efficiency in communication.

The description above also applies to an ultra-large aperture antenna array based on the radio stripe front haul architecture, since the ultra-large aperture antenna array based on the radio stripe front haul architecture is very similar to the cell-free system based on the radio stripe front haul architecture.

However, although the cell-free system has strong space domain multi-user multiplexing capabilities, the capacity of the cell-free system is severely limited by pilot signals when facing scenarios with a massive number of connections.

For the problem of lacking appropriate pilot signals in a cell-free system, no effective solutions have been provided in the related art.

## Summary

Embodiments of the present disclosure provide an information transmission method and apparatus, a storage medium and an electronic apparatus, which may at least solve the problem of lacking appropriate pilot signals in a cell-free system in the related art.

According to an embodiment of the present disclosure, an information transmission method applied to a User Equipment (UE) is provided. The information transmission method includes: determining W ultra-sparse pilots, wherein W is an integer greater than 0; and transmitting the W ultra-sparse pilots and target information to a cell-free system.

According to another embodiment of the present disclosure, an information transmission apparatus is also provided, including: a determination module, configured to determine W ultra-sparse pilots, wherein W is an integer greater than 0; and a transmission module, configured to transmit the W ultra-sparse pilots and target information to a cell-free system.

According to another embodiment of the present disclosure, a computer readable storage medium is also provided. The computer readable storage medium stores a computer program, and the computer program is configured to execute the operations in any one of the method embodiments when running.

According to another embodiment of the present disclosure, an electronic apparatus is also provided. The electronic apparatus includes a memory and a processor, wherein the memory stores a computer program, and the processor is configured to run the computer program so as to execute the operations in any one of the method embodiments.

By means of the embodiments of the present disclosure, W determined ultra-sparse pilots may be sent together with target information to a cell-free system. The problem of lacking appropriate pilot signals in a cell-free system in the related art may be solved. By virtue of the solution provided in the embodiments of the present disclosure, appropriate W ultra-sparse pilots may be sent to the cell-free system for the use by the cell-free system.

## Brief Description of the Drawings

Fig. 1 is a schematic diagram of the architecture of a cell-free system in the related art;

Fig. 2 is a schematic diagram of another architecture of a cell-free system in the related art;

Fig. 3 is a block diagram of the hardware structure of a User Equipment (UE) for implementing an information transmission method according to an embodiment of the present disclosure;

Fig. 4 is a flowchart of an information transmission method according to an embodiment of the present disclosure;

Fig. 5 is a schematic diagram of an implementation of defining a physical resource block according to an exemplary embodiment of the present disclosure;

Fig. 6 is another schematic diagram of an implementation of defining a physical resource block according to an exemplary embodiment of the present disclosure;

Fig. 7 is a schematic diagram of another implementation of defining a demodulation reference signal according to an exemplary embodiment of the present disclosure;

Fig. 8 is a schematic diagram of an implementation of defining a demodulation reference signal by using an Orthogonal Covering Code (OCC) code according to an exemplary embodiment of the present disclosure;

Fig. 9 is a schematic diagram of another implementation of defining a demodulation reference signal by using an OCC code according to an exemplary embodiment of the present disclosure;

Fig. 10 is a schematic diagram of still another implementation of defining a demodulation reference signal by using an OCC code according to an exemplary embodiment of the present disclosure;

Fig. 11 is a schematic diagram of an implementation of Physical Resource Block (PRB)-based transmission according to an exemplary embodiment of the present disclosure;

Fig. 12 is a schematic diagram of an implementation of defining a demodulation reference signal according to an exemplary embodiment of the present disclosure;

Fig. 13 is a schematic diagram of another implementation of defining a demodulation reference signal according to an exemplary embodiment of the present disclosure;

Fig. 14 is a schematic diagram of still another implementation of defining a demodulation reference signal according to an exemplary embodiment of the present disclosure;

Fig. 15 is a schematic diagram of another implementation of defining a reference signal according to an exemplary embodiment of the present disclosure;

Fig. 16 is a schematic diagram (I) of an implementation of defining a reference signal according to an exemplary embodiment of the present disclosure;

Fig. 17 is a schematic diagram (II) of an implementation of defining a reference signal according to an exemplary embodiment of the present disclosure;

Fig. 18 is a schematic diagram of an implementation of generating a Demodulation Reference Signal (DMRS) port according to an exemplary embodiment of the present disclosure;

Fig. 19 is a schematic diagram (III) of an implementation of defining a reference signal according to an exemplary embodiment of the present disclosure;

Fig. 20 is a schematic diagram (IV) of an implementation of defining a reference signal according to an exemplary embodiment of the present disclosure;

Fig. 21 is a schematic diagram of an implementation of an information transmission method according to an exemplary embodiment of the present disclosure;

Fig. 22 is a schematic diagram of an implementation of a constellation diagram according to an exemplary embodiment of the present disclosure;

Fig. 23 is a schematic diagram of an implementation of a Pulse Amplitude Modulation (PAM) constellation diagram according to an exemplary embodiment of the present disclosure;

Fig. 24 is a schematic diagram of an implementation of another PAM constellation diagram according to an exemplary embodiment of the present disclosure;

Fig. 25 is a schematic diagram of an implementation of a cross-shaped constellation diagram according to an exemplary embodiment of the present disclosure;

Fig. 26 is a schematic diagram of an implementation of another cross-shaped constellation diagram according to an exemplary embodiment of the present disclosure;

Fig. 27 is a schematic diagram of an implementation of a rotated cross-shaped constellation diagram according to an exemplary embodiment of the present disclosure;

Fig. 28 is a schematic diagram of an implementation of a rotated Additive Gaussian White Noise (AGWN)-processed cross-shaped constellation diagram according to an exemplary embodiment of the present disclosure;

Fig. 29 is a schematic diagram of an implementation of another rotated AGWN-processed cross-shaped constellation diagram according to an exemplary embodiment of the present disclosure;

Fig. 30 is a schematic diagram of an implementation of a partition according to an exemplary embodiment of the present disclosure;

Fig. 31 is a schematic diagram of an implementation of another partition according to an exemplary embodiment of the present disclosure;

Fig. 32 is a schematic diagram of a constellation diagram after rotation and scaling according to an exemplary embodiment of the present disclosure;

Fig. 33 is a schematic diagram of another constellation diagram after rotation and scaling according to an exemplary embodiment of the present disclosure;

Fig. 34 is a schematic diagram of still another constellation diagram after rotation and scaling according to an exemplary embodiment of the present disclosure; and

Fig. 35 is a structural block diagram of an information transmission apparatus according to an embodiment of the present disclosure.

## Detailed Description of the Embodiments

Embodiments of the present disclosure will be described below in detail with reference to the accompanying drawings and in conjunction with embodiments.

It should be noted that, terms such as "first" and "second" in the description, claims, and accompanying drawings of the present disclosure are used to distinguish similar objects, but are not necessarily used to describe a specific sequence or order.

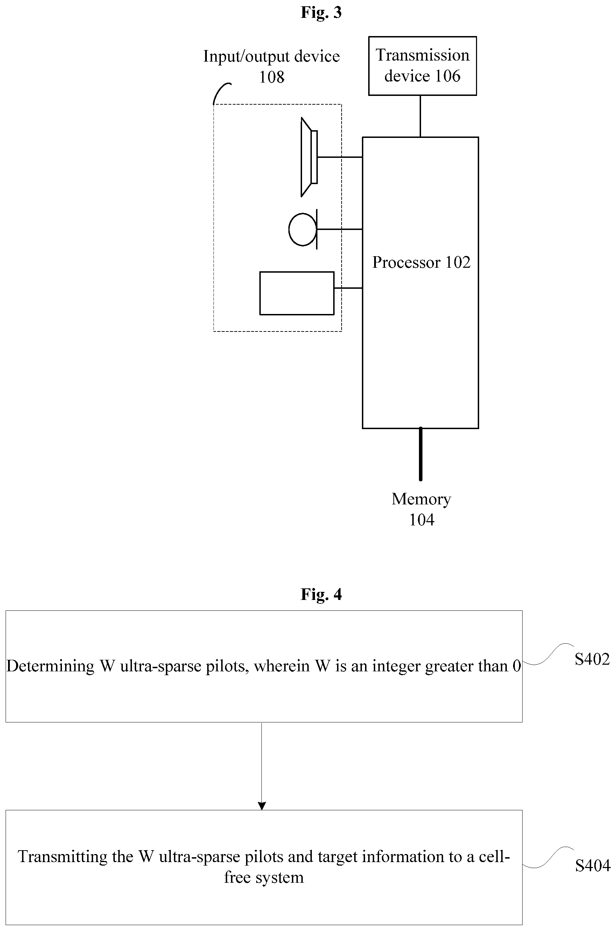

The method embodiments provided in the embodiments of the present disclosure may be executed in a User Equipment (UE) (also referred to as a terminal), a computer device or a similar computing device. Taking the running on a UE as an example, Fig. 3 is a block diagram of the hardware structure of a UE for implementing an information transmission method according to an embodiment of the present disclosure. As shown in Fig. 3, the UE may include one or more (only one is shown in Fig. 3) processors 102 (the one or more processors 102 may include, but are not limited to, a processing apparatus such as a microprocessor (e.g., a Micro-Controller Unit (MCU)) or a programmable logic device (e.g., a Field Programmable Gate Array (FPGA))) and a memory 104 for storing data. The UE may further include a transmission device 106 for a communication function and an input/output device 108. Those having ordinary skill in the art may understand that the structure shown in Fig. 3 is merely exemplary, which does not limit the structure of the foregoing UE. For example, the UE may further include more or fewer components than shown in Fig. 3, or have a different configuration from that shown in Fig. 3.

The memory 104 may be configured to store a computer program, for example, a software program and modules of application software, such as a computer program corresponding to the information transmission method in the embodiments of the present disclosure. The one or more processors 102 may run the computer program stored in the memory 104, so as to execute various function applications and data processing, that is, to implement the foregoing method. The memory 104 may include a high-speed random access memory, and may also include a non-volatile memory, such as one or more magnetic storage devices, flash memory, or other non-volatile solid-state memory. In some examples, the memory 104 may further include a memory remotely located with respect to the one or more processors 102, which may be connected to the UE over a network. Examples of such networks include, but are not limited to, the Internet, intranets, local area networks, mobile communication networks, and combinations thereof.

The transmission device 106 is configured to receive or transmit data via a network. Specific examples of the described network may include a wireless network provided by a communication provider of the UE. In an example, the transmission device 106 may include a Network Interface Controller (NIC) that may be coupled to other network devices via a base station to communicate with the Internet. In an example, the transmission device 106 may be a Radio Frequency (RF) module for communicating wirelessly with the Internet.

An information transmission method running on the described UE is provided in the present embodiment. Fig. 4 is a flowchart of an information transmission method according to an embodiment of the present disclosure. As shown in Fig. 4, a flow of the information transmission method includes the following operations S402 and S404.

In operation S402, W ultra-sparse pilots are determined, wherein W is an integer greater than 0.

In operation S404, the W ultra-sparse pilots and target information are transmitted to a cell-free system.

By means of the technical solution, W determined ultra-sparse pilots may be sent together with target information to a cell-free system. The problem of lacking appropriate pilot signals in a cell-free system in the related art may be solved. By virtue of the solution provided in the embodiments of the present disclosure, appropriate W ultra-sparse pilots may be sent to the cell-free system for the use by the cell-free system.

In an exemplary embodiment, in the above information transmission method, the target information includes at least one of: UE Identifier (UE_ID) information, UE type information, UE capability information, a number of transmission antennas and reception antennas of the UE, a number of transmission data streams supported by the UE, a Scheduling Request (SR), a Buffer Status Report (BSR), location information of the UE, one or more pieces of Access Point Identifier (AP_ID) information, or Channel State Information (CSI) about one or more Access Points (APs) to the UE.

In an exemplary embodiment, in a case where the target information includes the CSI, the CSI includes at least one of: a pre-coding matrix indication; a channel quality indicator; a rank indication; a Synchronization Signal and Physical Broadcast Channel Block (SSB) resource indication; or a reference signal power.

After the cell-free system receives the target information, the target information may assist in better access, scheduling, multi-user pairing, paging, UE mobility management, and other applications of the cell-free system, as well as facilitate the conduction of perception applications of the cell-free system.

For instance, when ultra-sparse pilots are transmitted to the cell-free system together with information containing the UE_ID, they can be used for performing random access. In other words, "ultra-sparse pilots plus information containing the UE_ID" may be used as a Msg1 of a random access channel (e.g., a Random Access Channel (RACH) or a Physical Random Access Channel (PRACH)).

In a cell-free system, continuing with the conventional random access method may pose significant challenges because the Msg1 of the conventional random access method is based on Zadoff-Chu (ZC) sequences. If a 4-step RACH is adopted, then the Msg1 only contains one ZC sequence. If a 2-step RACH is adopted, then the Msg1 contains one ZC sequence and one data packet.

However, if the AP is required to detect the ZC sequence contained in the Msg1 and perform channel estimation based on the ZC sequence contained in the Msg1, the processing complexity on the AP would increase significantly, raising the cost and power consumption of the AP. On the other hand, if the AP does not process the Msg1 and instead forward the Msg1 to the CPU via radio stripe front haul, data of all APs would need to be separately transmitted to the CPU, meaning that in a case of M APs, information of M Msg1s would need to be transmitted on the radio stripe front haul. If the number M of the APs is large, transmitting the Msg1s would require a considerable bandwidth on the radio stripe front haul. Moreover, the Msg1s of a large number of APs are transmitted back to the CPU, and this would require the CPU to process all Msg1s in a short time, which is a significant burden on the CPU.

In the embodiments of the present disclosure, a combination of the ultra-sparse pilots and the information containing the UE_ID serves as the Msg1 of the RACH or PRACH, this allows APs to continue with their simple channel estimation and space domain MRC combining operations, maintaining simple implementation and low power consumption of the AP, the requirement on the bandwidth of the radio stripe front haul does not need to increase significantly, and the CPU does not need to add too much processing complexity for the Msg1s.

In another embodiment, when ultra-sparse pilots are transmitted together with information containing the UE_ID, they can serve as a "heartbeat signal" sent by a UE in the cell-free system. This aids the cell-free system in more easily achieving AP energy saving, UE mobility management, pilot allocation, paging, and other functions.

In another embodiment, when ultra-sparse pilots are transmitted together with information containing the UE_ID, they can be used as a scheduling request sent by a UE in the cell-free system. This simplifies the implementation of multi-user scheduling.

In another embodiment, when ultra-sparse pilots are transmitted together with information containing the UE capability information, they can be used by the system to conduct transmission matching the UE capabilities.

In another embodiment, when ultra-sparse pilots are transmitted together with information containing the UE_ID and the BSR, they can assist in achieving low signaling overhead and low latency for UE uplink transmission. When a UE has uplink data to transmit, the UE can directly send "ultra-sparse pilots plus information containing UE_ID and BSR" to the cell-free system, such that the cell-free system can directly allocate uplink transmission resources to the UE, allowing the UE to transmit its data.

In another embodiment, when ultra-sparse pilots are transmitted together with location information of a UE, they can assist the cell-free system in achieving AP energy saving, UE mobility management, pilot allocation, paging, sensing, and other functions.

In another embodiment, when ultra-sparse pilots are transmitted together with one or more pieces of AP_ID information, they can assist the cell-free system in achieving AP energy saving, UE mobility management, pilot allocation, paging, sensing, and other functions.

In another embodiment, when ultra-sparse pilots are transmitted together with Channel State Information (CSI) of one or more APs to the UE, they can assist the cell-free system in achieving optimal multi-user scheduling, multi-user pairing, resource allocation, power allocation, beam management, handover management, paging, and other functions.

In a feasible implementation, the channel state information (CSI) includes at least one of: a Pre-coding Matrix Indication (PMI); a Channel Quality Indicator (CQI); a Rank Indication (RI); a Synchronization Signal and Physical Broadcast Channel Block (SSB) Resource Indication (SSBRI); or a Reference Signal Power (RSRP). Pre-coding in the Pre-coding Matrix Indication is information required for preprocessing a transmission signal at a transmitter in a multi-antenna system, usually in the form of a matrix. In a Multiple-Input Multiple-Output (MIMO) system, both a receiver and a transmitter store a set of codebook containing several pre-coding matrices. The receiver can select a target pre-coding matrix from the codebook based on an estimated channel matrix and predefined criteria, then feedback an index value of the target pre-coding matrix and quantified Channel State Information (i.e., channel state quantified information) to the transmitter. At the next moment, the transmitter uses a new pre-coding matrix and determines an encoding and modulation scheme for the codeword based on the channel state quantified information feedback from the receiver. The Channel Quality Indicator refers to an index value of the channel quality that meets certain performance criteria, such as a Block Error Rate (BLER) of 10%. This index value includes information about the current modulation scheme, coding rate, and efficiency. Generally, the larger the index value of the Channel Quality Indicator (CQI), the higher the coding efficiency. The Rank in the Rank Indication refers to a rank of an antenna matrix in the MIMO scheme, representing the number of parallel effective data streams. The SSB Resource Indication can indicate beam indices and can be used for beam management. Here, SSB refers to Synchronization Signal and Physical Broadcast Channel (PBCH) block. The SSB is composed of three parts: Primary Synchronization Signals (PSS), Secondary Synchronization Signals (SSS), and PBCH blocks. The Reference Signal Power may indicate signal strength. For example, L1-RSRP can indicate beam strength.

In an exemplary embodiment, in the above information transmission method, only U symbols in each ultra-sparse pilot of the W ultra-sparse pilots take non-zero values, and the U non-zero values are carried on U resource elements adjacent in a time-frequency domain, or carried on U symbols in sequence in a time domain, or carried on U resource elements on adjacent sub-carriers in a frequency domain, wherein U is greater than 0 and less than 5.

In an exemplary embodiment, in the above information transmission method, a length of each ultra-sparse pilot of the W ultra-sparse pilots is greater than 24.

In an exemplary embodiment, in the above information transmission method, U=1.

In an exemplary embodiment, in the above information transmission method, U=2, and the non-zero values [p1,p2] include: [a1, a2], or [b1, b2], wherein [a1, a2] is orthogonal to [b1, b2], i.e., a1'*b1 + a2'*b2 = 0, where a1' and a2' are conjugates of complex numbers a1 and a2, respectively.

In an exemplary embodiment, in the above information transmission method, U=2, and the non-zero values [p1,p2] take at least one of the following sets of values: [p1,p2]=[1,1]; [p1,p2]=[1,-1]; [p1,p2]=[1,j]; [p1,p2]=[1,-j].

In an exemplary embodiment, in the above information transmission method, U=4, and the non-zero values [p1,p2,p3,p4] take at least one of the following sets of values:

[p1,p2,p3,p4]=[a1,a2,a3,a4]; [p1,p2,p3,p4]=[b1,b2,b3,b4]; [p1,p2,p3,p4]=[c1,c2,c3,c4]; [p1,p2,p3,p4]=[d1,d2,d3,d4]; wherein [a1,a2,a3,a4], [b1,b2,b3,b4], [c1,c2,c3,c4], [d1,d2,d3,d4] are orthogonal to each other. It can be understood that when [a1,a2,a3,a4] is orthogonal to [b1,b2,b3,b4], a1'*b1 + a2'*b2 + a3'*b3 + a4'*b4 = 0. Other cases are similar and will not be described again in the embodiments of the present disclosure.

When U=4, the four non-zero values p1,p2 may follow at least the following cases: [p1,p2,p3,p4] =

| No. | c1 | c2 | c3 | c4 | No. | c1 | c2 | c3 | c4 |
|---|---|---|---|---|---|---|---|---|---|
| 1 | 1 | 1 | 1 | 1 | 33 | 1 | 1 | 1 | j |
| 2 | 1 | 1 | -1 | -1 | 34 | 1 | 1 | -1 | -j |
| 3 | 1 | -1 | 1 | -1 | 35 | 1 | -1 | 1 | -j |
| 4 | 1 | -1 | -1 | 1 | 36 | 1 | -1 | -1 | j |
| 5 | 1 | 1 | j | -j | 37 | 1 | 1 | j | 1 |
| 6 | 1 | 1 | -j | j | 38 | 1 | 1 | -j | -1 |
| 7 | 1 | -1 | j | j | 39 | 1 | -1 | j | -1 |
| 8 | 1 | -1 | -j | -j | 40 | 1 | -1 | -j | 1 |
| 9 | 1 | j | 1 | -j | 41 | 1 | j | 1 | 1 |
| 10 | 1 | j | -1 | j | 42 | 1 | j | -1 | -1 |
| 11 | 1 | -j | 1 | j | 43 | 1 | -j | 1 | -1 |
| 12 | 1 | -j | -1 | -j | 44 | 1 | -j | -1 | 1 |
| 13 | 1 | j | j | -1 | 45 | 1 | j | j | -j |
| 14 | 1 | j | -j | 1 | 46 | 1 | j | -j | j |
| 15 | 1 | -j | j | 1 | 47 | 1 | -j | j | j |
| 16 | 1 | -j | -j | -1 | 48 | 1 | -j | -j | -j |
| 17 | 1 | 1 | 1 | -1 | 49 | 1 | 1 | 1 | -j |
| 18 | 1 | 1 | -1 | 1 | 50 | 1 | 1 | -1 | j |
| 19 | 1 | -1 | 1 | 1 | 51 | 1 | -1 | 1 | j |
| 20 | 1 | -1 | -1 | -1 | 52 | 1 | -1 | -1 | -j |
| 21 | 1 | 1 | j | j | 53 | 1 | 1 | j | -1 |
| 22 | 1 | 1 | -j | -j | 54 | 1 | 1 | -j | 1 |
| 23 | 1 | -1 | j | -j | 55 | 1 | -1 | j | 1 |
| 24 | 1 | -1 | -j | j | 56 | 1 | -1 | -j | -1 |
| 25 | 1 | j | 1 | j | 57 | 1 | j | 1 | -1 |
| 26 | 1 | j | -1 | -j | 58 | 1 | j | -1 | 1 |
| 27 | 1 | -j | 1 | -j | 59 | 1 | -j | 1 | 1 |
| 28 | 1 | -j | -1 | j | 60 | 1 | -j | -1 | -1 |
| 29 | 1 | j | j | 1 | 61 | 1 | j | j | j |
| 30 | 1 | j | -j | -1 | 62 | 1 | j | -j | -j |
| 31 | 1 | -j | j | -1 | 63 | 1 | -j | j | -j |
| 32 | 1 | -j | -j | 1 | 64 | 1 | -j | -j | j |

In an exemplary embodiment, in the above information transmission method, in a case where W is greater than 1, the W ultra-sparse pilots are independent of each other.

In an exemplary embodiment, in the above information transmission method, the W ultra-sparse pilots are determined according to information in a transmitted data packet.

In an exemplary embodiment, in the above information transmission method, the W ultra-sparse pilots are determined according to one or more bits in the transmitted data packet.

In an exemplary embodiment, each ultra-sparse pilot of the W ultra-sparse pilots is from a pilot set containing D ultra-sparse pilots, and each ultra-sparse pilot of the W ultra-sparse pilots is determined from the pilot set by log2(D) bits in a transmitted data packet.

In an exemplary embodiment, W is equal to 2 or 1.

In order to facilitate the understanding of the described information transmission method, the described technical solutions will be explained below in combination with exemplary embodiments, which are however not intended to limit the technical solutions of the embodiments of the present disclosure.

In an exemplary embodiment, a specific implementation method for solving the problem of conventional pilot schemes is provided as follows.

When a UE does not have data to be transmitted, in order to save power, the UE usually does not maintain a constant connection with a system, which means that the UE is disconnected from the system, also known as being in an unconnected state (including: Non connected state, Non RRC connected state, Connectionless state, Connection-free state, Disconnected state). The aforementioned unconnected state may also be understood as being in an idle state (Idle state) or an inactive state (Inactive state). When the UE is originally in an unconnected state, i.e., has not yet entered a connected state, if the conventional uplink data transmission scheme is adopted, in order to transmit information, the UE needs to first establish a connection with the system before conducting the transmission. After entering the connected state (also known as the Active state), the UE can then apply for uplink transmission resources from the system. Only after obtaining the granted resources from the system, can the UE perform actual data transmission. It is evident that for a UE to complete a conventional uplink data transmission, the UE needs to perform many operations before the transmission actually takes place, which undoubtedly increases the power consumption of the UE and also increases the signaling overhead of the system.

In contrast, for unconnected data transmission, the UE does not need to establish a connection before data transmission, nor does it need to apply for dedicated transmission resources from the system; instead, it allows the UE in an unconnected state to autonomously decide on transmission without notifying the system beforehand and directly transmit data to the system on a preset public transmission resource. Therefore, unconnected data transmission can achieve minimalist data transmission, reducing transmission power consumption and latency, as well as saving the signaling overhead required for transmission, with very obvious advantages.

However, in unconnected transmission, pilots/reference signals are also selected autonomously by the user from the pilot set, so it is possible for different users to choose the same pilot/reference signal, i.e., the problem of pilot/reference signal collision may arise. In some exemplary embodiments of the present disclosure, the pilot and reference signal are equivalent. If the number of pilots or reference signals is limited, and the user load is high, meaning there are many users, the probability of pilot/reference signal collision is very high. Once pilot/reference signal collision occurs between two users, it is difficult for the CPU and APs to separate these two users through the pilot/reference signal.

To reduce pilot/reference signal collision, independent multi-pilot technology may be used. Independent multi-pilot technology refers to a transmission that includes two or more pilots in one transmission, and the pilots are independent, unrelated, or non-correlated with each other. In this way, under the same pilot overhead, the probability of simultaneous collision of independent multi-pilots from different UEs is much smaller than that under the case of a single pilot. The CPU, through an iterative receiver, can resolve the data packets corresponding to the UEs in each round through those pilots that do not collide with each other, then reconstruct the pilot and data from the data packet according to the information related to the pilot contained in the data packet, and eliminate the reconstructed pilot and data from the received signal. This iteration continues until all resolvable UE data packets are resolved. Since the probability of simultaneous collision of independent multi-pilots is much smaller than that under the case of a single pilot, the transmission scheme using independent multi-pilots can support a high UE load in unconnected transmission situations.

It is necessary to define as many pilots as possible, meaning that the number of pilots in the pilot set should be as large as possible. However, increasing the number of pilots leads to an increase in the overhead occupied by the pilots. On the other hand, if conventional pilot technology is adopted, i.e., it is still required to estimate the channel and time-frequency offset through each pilot to complete the demodulation of the data symbol, then each pilot needs to have signals throughout the entire transmission bandwidth and time. In other words, the respective pilots cannot be too sparse throughout the entire transmission bandwidth and time, and need to have a certain density to estimate the entire transmission bandwidth of the wireless multipath channel (i.e., frequency-selective channel) and the frequency offset within the transmission time. Therefore, to ensure the transmission performance in the unconnected state, following the relevant pilot scheme, the overhead occupied by the pilots will significantly increase, and the detection complexity will also significantly increase.

The sparse pilot schemes can significantly increase the number of pilots without increasing the pilot resource overhead, thereby significantly reducing the probability of pilot collisions. The CPU may extract channel information from data symbols, thereby relieving the pressure of sparse pilots, which means that it is only required to estimate partial information of the wireless channel from the sparse pilots, without the need to estimate all information of the wireless channel from the sparse pilots.

On the other hand, independent multi-pilot technology refers to a transmission that includes two or more pilots, and the pilots are unrelated or independent with each other. In this way, under the same pilot overhead, the probability of simultaneous collision of W independent pilots of different users is much smaller than that under the case of a single pilot. The CPU, through an iterative receiver, can resolve the data packets corresponding to the UEs in each round through those pilots that do not collide with each other, then reconstruct the pilot and data from the data packet according to the information related to the pilot contained in the data packet, and eliminate the reconstructed pilot and data from the received signal. This iteration continues until all resolvable UE data packets are resolved. Since the probability of simultaneous collision of independent multi-pilots is much smaller than that under the case of a single pilot, the transmission scheme using independent multi-pilots can support a high UE load in competitive unconnected state transmission (or competitive unscheduled transmission) situations. In this embodiment, independent multi-pilot technology and sparse pilot technology can be combined, i.e., using multiple independent and unrelated sparse pilots can be adopted to further reduce the situation of user pilot collisions and further enhance user load.

The information transmission mentioned above refers to the transmission of information in a broad sense, which may be either service data or data used for system control, i.e., signaling. In other words, the bits that need to be transmitted, whether these bits are service data bits or signaling bits, may be understood as "information" in the embodiments of the present disclosure. From another perspective, the information that needs to be transmitted is also data. Different English expressions, such as message, information, payload, are all within the scope of protection in the embodiments of the present disclosure.

In another exemplary embodiment of the present disclosure, an implementation scheme is provided for ultra-sparse pilots and multiple ultra-sparse pilots. In conventional pilot schemes, a set of Demodulation Reference Signals (DMRS) is defined, which includes 12 reference signals. A Demodulation Reference Signal can also be referred to as a Demodulation Reference Signal port (DMRS port), which means that in conventional pilot schemes, a set of 12 DMRS ports is defined.

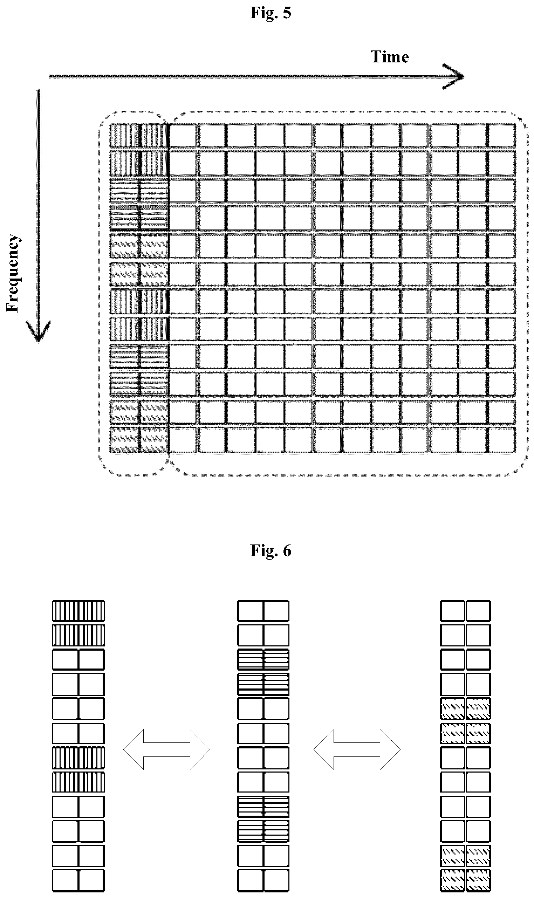

Fig. 5 is a schematic diagram of an implementation of defining a physical resource block according to an exemplary embodiment of the present disclosure. As shown in Fig. 5, a Physical Resource Block (PRB) defined includes 14 Orthogonal Frequency Division Multiplexing (OFDM) (or Discrete Fourier Transform-Spread-Orthogonal Frequency Division Multiplexing (DFT-S-OFDM) or Single-carrier Frequency-Division Multiple Access (SC-FDMA)) symbols in a time domain and 12 subcarriers in a frequency domain. Each small block represents a subcarrier of an OFDM symbol, and is also commonly referred to as a Resource Element (RE). That is, one PRB shown in Fig. 5 contains a total of 12*14=168 REs.

For OFDM, one RE may carry one symbol. On the other hand, if U symbols are carried on adjacent REs, it can also be said that these U symbols are carried on adjacent time-frequency resource symbols. Or conversely, if U symbols are carried on adjacent time-frequency resource symbols, for OFDM, it is equivalent to these U symbols being carried on adjacent REs.

As shown in Fig. 6, the first 2 OFDM symbols are used to carry a demodulation reference signal, i.e., the first 2 OFDM symbols serve as the reference signal area, meaning that the demodulation reference signal occupies 1/7 of the resource overhead. The area outside the reference signal area is a data symbol area.

Fig. 5 is a schematic diagram of an implementation of defining a physical resource block according to an exemplary embodiment of the present disclosure. As shown in Fig. 6, the DMRS can be divided into three groups depending on the position of the RE occupied by the DMRS, which are respectively the first group, the second group, and the third group from left to right in Fig. 6. The non-zero symbols (or non-zero signals, useful signals, etc.) (i.e., the symbols have non-zero values) of the first group of DMRS are carried on REs as shown in the pattern of Fig. 6, and the first group of 4 DMRS ports are distinguished by OCC codes. The non-zero symbols of the second group of DMRSs are carried on REs as shown in the pattern of Fig. 6, and the second group of 4 DMRS ports are distinguished by OCC codes. The non-zero symbols of the third group of DMRS are carried on REs as shown in the pattern of Fig. 6, and the third group of 4 DMRS ports are distinguished by OCC codes. Each demodulation reference signal takes the value of 0, or has no signal, on the blank unfilled REs as shown in the pattern. It can be seen that for each demodulation reference signal, not all REs in the demodulation reference signal area have signals. However, for a UE, as long as this UE uses a certain reference signal/a certain reference signal port, even though this reference signal port has no signals on some REs in the DMRS area, the UE usually cannot use these REs to transmit data. From this perspective, the resource overhead occupied by a reference signal/a reference signal port is also 1/7.

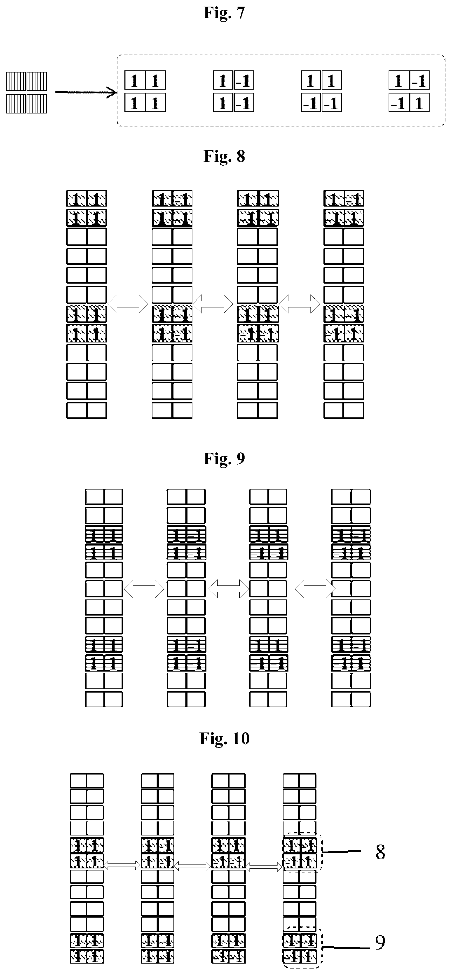

The non-zero symbols of each group of demodulation reference signals are carried on the same resource elements (RE) and can only be distinguished by different non-zero symbols to identify different reference signals. Typically, different reference signal ports can be distinguished by time domain OCC codes and frequency domain OCC codes. Fig. 7 is a schematic diagram of another implementation of defining a demodulation reference signal according to an exemplary embodiment of the present disclosure. As shown in Fig. 7, taking the first group of 4 demodulation reference signals in Fig. 6 as an example, the 4 demodulation reference signal ports are distinguished by jointly using two long OCC codes [1,1], [1,-1] in the time domain, and two long OCC codes [1,1], [1,-1] in the frequency domain; that is, in each group of DMRS ports, different OCC codes are carried on the REs with patterns to generate different DMRS ports. The situation with the 4 reference signals in the second and third groups in Fig. 6 is similar. In this way, a total of 12 defined demodulation reference signals (i.e., 12 demodulation reference signal ports) can be obtained.

Fig. 8 is a schematic diagram of an implementation of defining a demodulation reference signal by using an Orthogonal Covering Code (OCC) code according to an exemplary embodiment of the present disclosure. As shown in Fig. 8, the four demodulation reference signal ports in the first group of four demodulation reference signals in Fig. 4 are distinguished by jointly using OCC codes with the length of 2 (e.g., [1,1] and [1,-1]) in the time domain and OCC codes with the length of 2 (e.g., [1,1] and [1,-1]) in the frequency domain.

Fig. 9 is a schematic diagram of another implementation of defining a demodulation reference signal by using an OCC code according to an exemplary embodiment of the present disclosure. As shown in Fig. 9, four demodulation reference signal ports in the second group of four demodulation reference signals in Fig. 5 are distinguished by jointly using OCC codes with the length of 2 (e.g., [1,1] and [1,-1]) in the time domain and OCC codes with the length of 2 (e.g., [1,1] and [1,-1]) in the frequency domain.

Fig. 10 is a schematic diagram of still another implementation of defining a demodulation reference signal by using an OCC code according to an exemplary embodiment of the present disclosure. As shown in Fig. 10, a first reference signal element is denoted by the number 8, and a second reference signal element is denoted by the number 9. The four demodulation reference signal ports in the third group of four demodulation reference signals in Fig. 5 are distinguished by jointly using OCC codes with the length of 2 (e.g., [1,1] and [1,-1]) in the time domain and OCC codes with the length of 2 (e.g., [1,1] and [1,-1]) in the frequency domain.

In the embodiments of the present disclosure, reference signals carried on several REs adjacent in a time domain and a frequency domain may be referred to as a Reference Signal Element (RSE), and reference signals carried on several temporally sequential symbols may also be referred to as a Reference Signal Element (RSE). For example, in Figs. 5-9, the reference signal carried in four continuous Resource Elements (REs) in a time-frequency domain is referred to as a Reference Signal Element (RSE), and visually, the reference signal in the 2*2 square lattice filled with a pattern is referred to as a Reference Signal Element (RSE). In terms of the function of channel estimation, a Reference Signal Element (RSE) has, in addition to a characteristic of being formed by adjacent resource elements in the time domain, a characteristic that each Reference Signal Element (RSE) can be used to estimate one channel value when channel estimation is performed by using the reference signal.

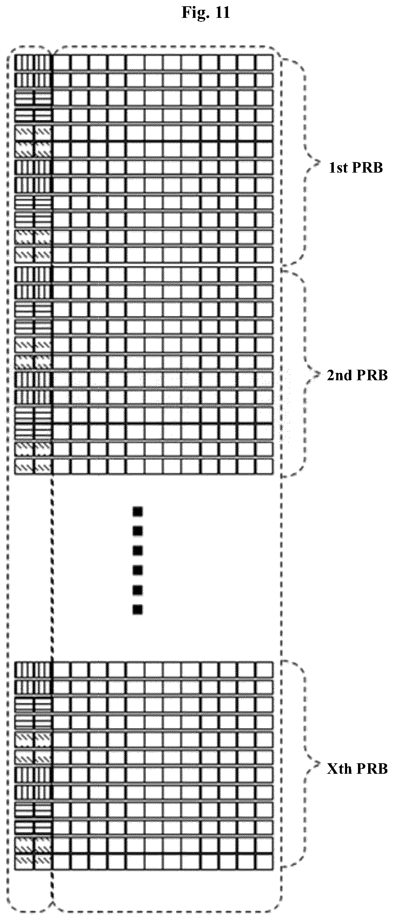

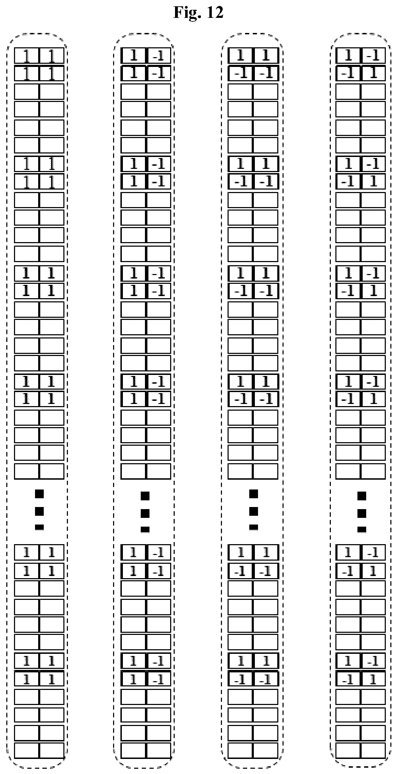

According to this definition, in the Demodulation Reference Signal (DMRS) set defined in Fig. 4 to Fig. 10, each reference signal has 2 Reference Signal Elements (RSE) within the bandwidth of one PRB, thus allowing the estimation of 2 channel values within the bandwidth of one PRB (i.e., within the bandwidth of 12 subcarriers). The channel values of 12 subcarriers within one PRB need to be obtained through interpolation based on these channel values estimated based on the Reference Signal Elements (RSE). Fig. 11 is a schematic diagram of an implementation of Physical Resource Block (PRB)-based transmission according to an exemplary embodiment of the present disclosure. As shown in Fig. 11, if a transmission includes X PRBs, then the 12 demodulation reference signals (or 12 demodulation reference signal ports) of this reference signal set are as shown in Fig. 12, Fig. 13, and Fig. 14. Each reference signal has 2*X Reference Signal Elements (RSE), allowing the estimation of channel values at equally spaced 2*X locations across the entire transmission bandwidth, and then the channel values of all 12*X subcarriers within the transmission bandwidth may be obtained through interpolation.

The 12 Demodulation Reference Signals (DMRSs) may be divided into three groups according to the locations of occupied REs.

Fig. 12 is a schematic diagram of an implementation of defining a demodulation reference signal according to an exemplary embodiment of the present disclosure. As shown in Fig. 12, four demodulation reference signals of the first group are distinguished by an OCC code.

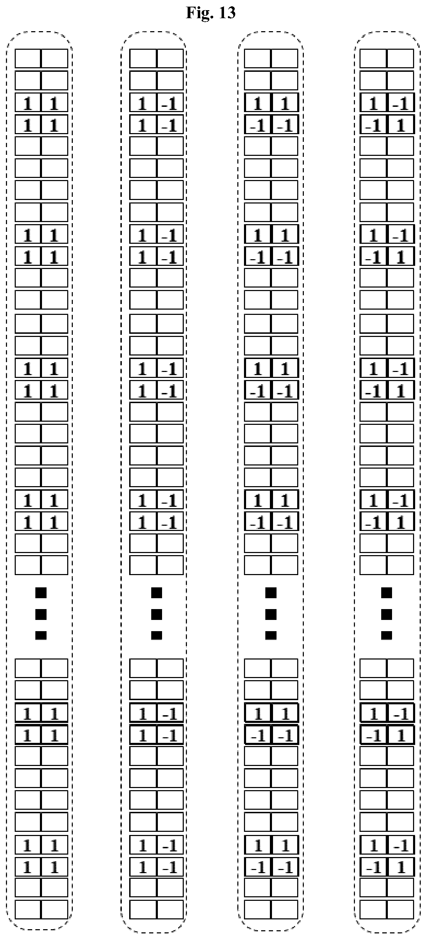

Fig. 13 is a schematic diagram of another implementation of defining a demodulation reference signal according to an exemplary embodiment of the present disclosure. As shown in Fig. 13, four demodulation reference signals of the second group are distinguished by an OCC code.

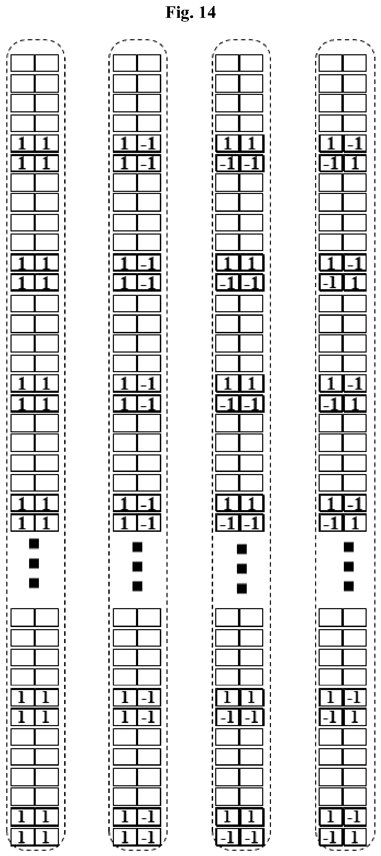

Fig. 14 is a schematic diagram of still another implementation of defining a demodulation reference signal according to an exemplary embodiment of the present disclosure. As shown in Fig. 14, four demodulation reference signals of the third group are distinguished through an OCC code.

It can be seen that, in order to estimate a channel of an entire transmission bandwidth of each accessing UE (also referred to as terminal), a large amount of resources may be occupied by the demodulation reference signal (or pilot), in other words, the demodulation reference signal needs to have a certain density within the entire transmission bandwidth, and cannot be too sparse. In Figs. 5-13, the density of such demodulation reference signals within the whole transmission bandwidth is two reference signals per PRB, or 2 Reference Signal Elements (RSE) per PRB.

For the system, the overhead of reference signals is 1/7, which means that the system devotes 1/7 of its resources to provide only 12 demodulation reference signals. For data transmission in the unconnected state, the probability of collision when any two UEs independently select reference signals is 1/12, which is still quite high. Therefore, demodulation reference signals will severely limit the number of UEs for data transmission in the unconnected state. If the reference signals are also used to estimate a certain Frequency Offset, the resources occupied by each reference signal need to be further increased, or the density of the reference signals in the transmission signal needs to be further increased. For example, the reference signal may need to be repeated in the time domain to estimate the frequency offset. In this way, the resources occupied by the reference signals are doubled, that is, the overhead is 2/7. In other words, the system devotes 2/7 of the resources to provide only 12 demodulation reference signals in order to estimate frequency-selective channels and frequency offset. If further, the system also needs to cope with a certain Timing Offset, then the resources occupied by the reference signals need to be further increased, for example, the system has to devote 3/7 or even 4/7 of its overhead to provide 12 demodulation reference signals. With such a high overhead, the system can only accommodate a small number of reference signal sets (or a limited number of reference signal ports), resulting in a very high collision probability for transmissions in the unconnected state.

If a multipath channel changes more rapidly in the frequency domain, that is, if the frequency-selective characteristics are more pronounced, then to ensure the accuracy of channel estimation, the density of demodulation reference signals in the frequency domain needs to be increased. This means a demodulation reference signal with greater density in the frequency domain, where each demodulation reference signal has 3 Reference Signal Elements (i.e., three 2*2 square lattices) within the bandwidth of each PRB, allowing for 3 estimation values per PRB, and thus 3*X estimation values in X PRBs. Linear interpolation can then be used to obtain the channel for all subcarriers across the X PRBs. This type of reference signal still occupies transmission resource overhead of 1/7, but only 8 demodulation reference signals (or 8 demodulation reference signal ports) can be divided, which is fewer than defined previously. It is evident that the channel estimation capability is generally inversely proportional to the number of reference signals.

Therefore, when applying reference signals to unconnected transmission scenarios, the root of the problem lies in the heavy task or responsibility of the reference signals: the reference signals are needed both to estimate the frequency-selective channel and timing and frequency offsets of the entire transmission channel and to identify terminal (UE) users. Consequently, the reference signals need to occupy a considerable amount of time-frequency resources to accomplish such a heavy task. This results in a severe shortage of reference signals within a fixed amount of resources. The number of UEs that can be supported in unconnected transmission is limited by the number of reference signals.

In the embodiments of the present disclosure, the tasks of reference signals can be greatly reduced, allowing each reference signal to occupy the minimum amount of resources, or in other words, each reference signal can be designed to be sparse as far as possible. This maximizes the number of reference signals, ultimately allowing unconnected transmission to support more UEs.

Specifically, in the embodiments of the present disclosure, data-based channel estimation techniques (rather than reference signal-based channel estimation techniques) are adopted to estimate the channels within the entire transmission bandwidth and estimate time-frequency offsets based on the characteristics of the data itself, such as the geometric features of the constellation diagram of the data symbols. In other words, it is no longer necessary to use reference signals to estimate the channel and time-frequency offsets across the entire transmission bandwidth. Taking channel estimation as an example, to simplify the description, a Block Flat Fading channel is used as an example. A partition matching method which is introduced later can be applied to estimate the channel.

Therefore, in the embodiments of the present disclosure, the task of the reference signals is much smaller than in related schemes, so each reference signal occupies much fewer resources than in related schemes, and thus, under the case of a fixed overhead, the number of reference signals is much greater than in related schemes.

On the other hand, when a cell-free system has many APs, the cell-free system can theoretically provide strong space domain capabilities to improve the performance of multi-terminal access. To harness this space domain capability, the embodiments of the present disclosure propose using "ultra-sparse" reference signals to estimate the spatial channels experienced by each UE signal, and then use these estimated spatial channels for spatial combining of the received signals. The receiver then uses the spatially combined data symbols sk to estimate the channel within the entire transmission bandwidth and time-frequency offsets experienced by the signal of UE k. The channel and time-frequency offsets are then compensated for the spatially combined data symbols sk. Finally, demodulation and decoding are performed on the data symbols with compensated channel and time-frequency offsets.

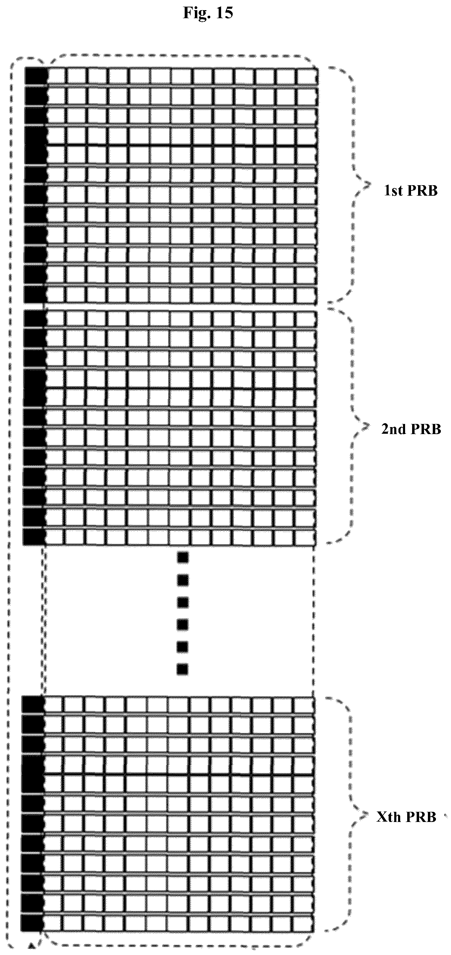

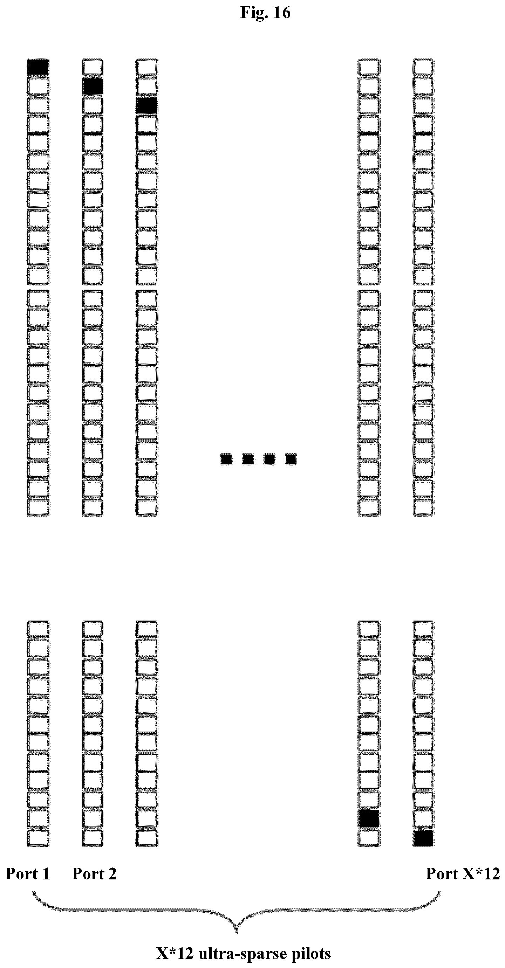

Thus, the embodiments of the present disclosure do not use reference signals to estimate the channel across the entire transmission bandwidth, or estimate time-frequency offsets. Fig. 15 is a schematic diagram of another implementation of defining a reference signal according to an exemplary embodiment of the present disclosure. As shown in Fig. 15, the reference signal proposed in the embodiments of the present disclosure occupies one OFDM symbol. One transmission includes time-frequency resources of X PRBs, and one PRB includes 14 OFDM (or DFT-S-OFDM or SC-FDMA) symbols in the time domain and 12 subcarriers in the frequency domain. The first OFDM symbol is used to carry demodulation reference signals, i.e., the first OFDM symbol serves as an ultra-sparse pilot area, with 1/14 of the resources used for transmitting reference signals, in other words, 12*X REs are used for transmitting reference signals. The area except the ultra-sparse pilot area is the data symbol area. Fig. 16 is a schematic diagram (I) of an implementation of defining a reference signal according to an exemplary embodiment of the present disclosure. As shown in Fig. 16, each reference signal defined by the system has a non-zero symbol (non-zero signal or useful signal) on only one RE, and no signal exists on the rest RE positions (or in other words, the rest RE positions take the value of 0). With the reference signal area occupying 1/14 of the overhead, a total of 12*X reference signals can be provided. Specifically, if there are 6 PRBs, and 1/14 of the overhead is occupied, then 6*12 = 72 reference signals can be provided, which is much greater than the number (e.g., 8 or 12) of reference signals in a New Radio (NR) system (the reference signal in the NR system occupies 1/7 of the overhead of the transmission resources).

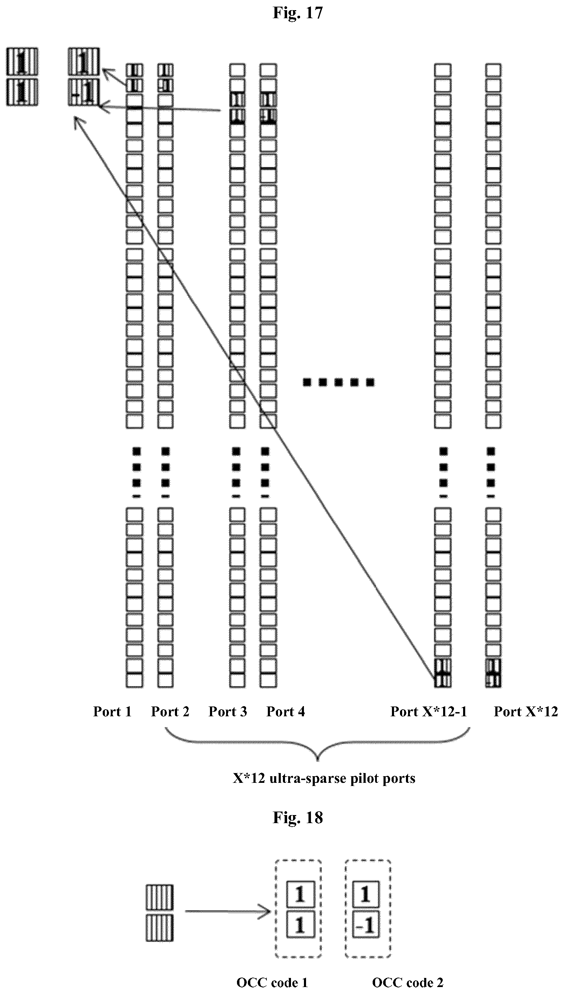

Fig. 17 is a schematic diagram (II) of an implementation of defining a reference signal according to an exemplary embodiment of the present disclosure. As shown in Fig. 17, each reference signal defined by the system only has a non-zero symbol (a non-zero signal, or a useful signal) on two REs, two reference signals distinguished by using an OCC with a length of 2 are provided on each two REs, and no signal exists in the rest positions (or in other words, the rest RE positions take the value of 0). With the reference signal area occupying 1/14 of the overhead, a total of 12*X reference signals can be provided. Specifically, if there are 6 PRBs, and 1/14 of the overhead is occupied, then 6*12 = 72 reference signals can be provided, which is much greater than the number (e.g., 8 or 12) of reference signals in a New Radio (NR) system. The number of ultra-sparse pilots is proportional to the number of PRBs.

Fig. 18 is a schematic diagram of an implementation of generating a Demodulation Reference Signal (DMRS) port according to an exemplary embodiment of the present disclosure. As shown in Fig. 18, different OCC codes (such as OCC code 1 [1,1] and OCC code 2 [1,-1]) are carried on two REs forming a pattern to generate different DMRS ports.

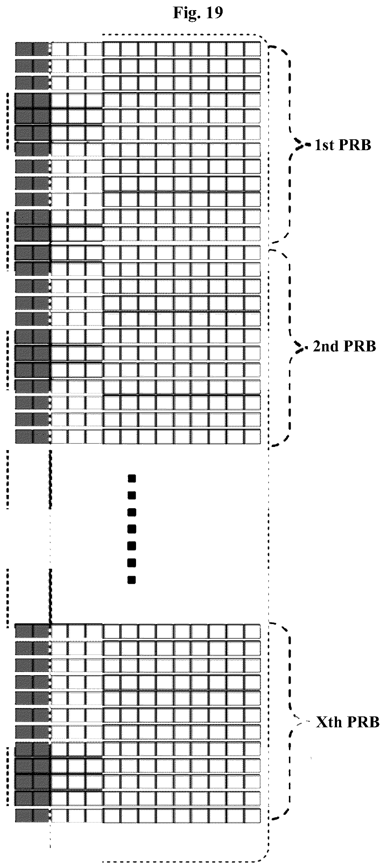

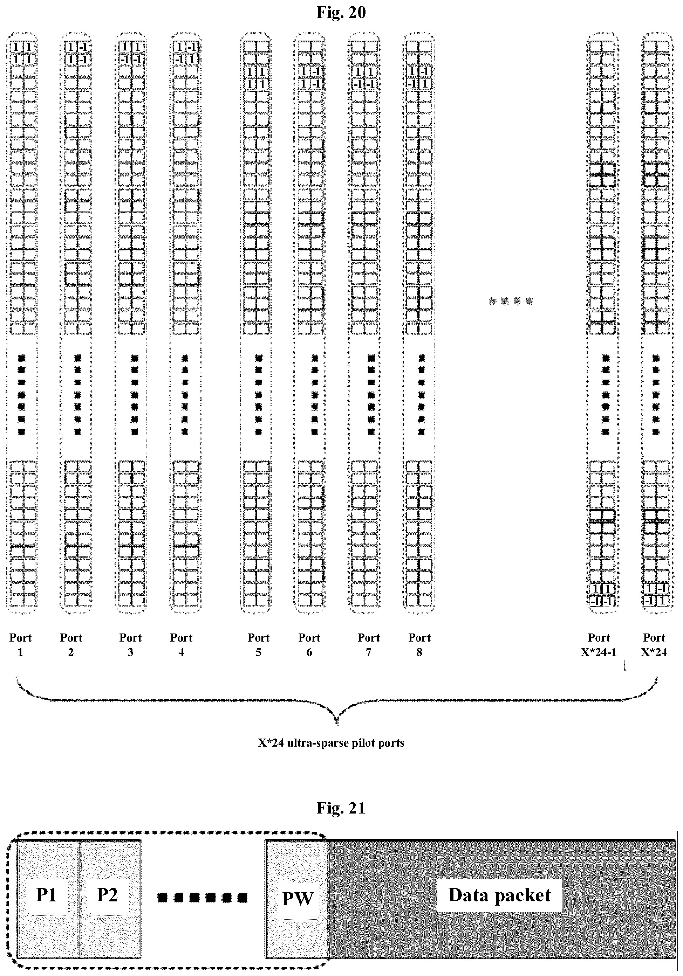

Fig. 19 is a schematic diagram (III) of an implementation of defining a reference signal according to an exemplary embodiment of the present disclosure. As shown in Fig. 19, the reference signal defined by the system occupies 2 OFDM symbols. Fig. 20 is a schematic diagram (IV) of an implementation of defining a reference signal according to an exemplary embodiment of the present disclosure. As shown in Fig. 20, each reference signal defined by the system has a non-zero symbol (a non-zero signal, or a useful signal) on only a set of four REs adjacent to each other in the time-frequency domain, but there are four reference signals multiplexing the group of four adjacent REs. The four reference signals multiplexing the same group of four adjacent REs are distinguished by an OCC code. In this way, in the transmission of X PRBs, 24*X reference signals may be provided in the reference signal area occupying 1/7 of the overhead. Specifically, if there are 6 PRBs, and 1/14 of the overhead is occupied, then 6*12 = 72 reference signals can be provided, which is much greater than the number (e.g., 8 or 12) of reference signals in a New Radio (NR) system, which shows that the number of ultra-sparse pilots is proportional to the number of PRBs.

The numerical values shown in the embodiments of the present disclosure are only exemplary description and are not specifically limited, and the values may be adjusted adaptively according to practical situations. It can be seen that sparse pilots are actually pilots that have very few non-zero elements in each pilot in a pilot set, for example, each pilot only has 1-4 non-zero elements, furthermore, the non-zero elements of each pilot in the pilot set are distributed in a centralized manner on the time-frequency resources, i.e., there is no need to spread or disperse the non-zero elements in the transmitted time-frequency resources. In this way, the number of pilots can be significantly increased without increasing the overhead of pilot resources, thereby significantly reducing the probability of pilot collisions. The CPU estimates a portion of the information of the wireless channel from the sparse pilot without having to estimate the entire information of the wireless channel from the sparse pilot. The CPU further extracts channel information from the data symbols, and uses the channel information to equalize the data symbols.

It should be noted that, the pilot is only used for spatial combining, but generally cannot be used for equalization of all transmission channels, and therefore may be considered as a spatial combining reference signal.

Although the ultra-sparse reference signals shown in Figs. 15-18 are all in the first one or two symbols of the transmission resource, the embodiments of the present disclosure do not limit the positions of the ultra-sparse reference signals, for example, the positions of the ultra-sparse reference signals may also be symbols in the middle of the transmission resource.

In the embodiments, a plurality of ultra-sparse pilots may also be applied to further reduce a pilot collision situation of the UEs, thereby further increasing a UE load. That is, a plurality of ultra-sparse pilots are included in one transmission, and the ultra-sparse pilots are unassociated/independent. In this way, under the same pilot overhead, the probability that a plurality of independent pilots of different users collide at the same time is much smaller than that under the case of a single pilot. The CPU, through an iterative receiver, can resolve the data packets corresponding to the UEs in each round through those pilots that do not collide with each other, then reconstruct the pilot and data from the data packet according to the information related to the pilot contained in the data packet, and eliminate the reconstructed pilot and data from the received signal. This iteration continues until all resolvable UE data packets are resolved. Since the probability of simultaneous collision of independent multi-pilots is much smaller than that under the case of a single pilot, the transmission scheme using independent multi-pilots can support a high UE load in competitive unconnected state transmission (or competitive unscheduled transmission) situations.

Fig. 21 is a schematic diagram of an implementation of an information transmission method according to an exemplary embodiment of the present disclosure. As shown in Fig. 21, W ultra-sparse reference signals are contained in one transmission, and information about the W ultra-sparse reference signals is contained in a data packet, for example, an index number (an index in a pilot set) of (each of) the W ultra-sparse reference signals is contained in the data packet. In this way, once a data packet of a certain UE is decoded successfully, information of all ultra-sparse pilots used in this transmission by this UE can be known, and interference cancellation of pilot signals can be performed.

For the quadrature amplitude modulation scheme, an embodiment of the present disclosure provides the following implementation solutions.

Binary Phase-Shift Keying (BPSK) and Quadrature Phase-Shift Keying (QPSK) modulation schemes, though having low spectral efficiency, have simple constellation diagrams and are not very sensitive to channel distortions, making it easy to apply the partition (area division) matching method introduced later for channel estimation. Therefore, BPSK and QPSK can be applied in scenarios where the pilot capacity is limited.

On the other hand, in scenarios requiring higher spectral efficiency, the spectral efficiency can be improved by increasing the order of the modulation scheme. Conventional high-order modulation schemes, such as Digital Amplitude Phase Modulation of 16QAM, 32QAM, 64QAM, and 256QAM, distribute their constellation points relatively evenly across the two-dimensional plane/complex plane, thus making full use of the two-dimensional signal space (i.e., the two-dimensional signal plane) of complex signals. Communication signals, from the perspective of a baseband, are typically represented by complex numbers, with the I-path signal as the real part and the Q-path signal as the imaginary part. Modulation symbols can also be represented by complex numbers, meaning that a modulation symbol can be represented by a complex number, for example, a modulation symbol s can be expressed as a+j*b, where j is the imaginary unit (j=sqrt(-1)), a is the real part of s and is transmitted on the I-path, and b is the imaginary part of s and is transmitted on the Q-path. For example, the constellation diagram of conventional 16QAM includes 16 points, represented by the following complex numbers:

3+3j, 3+j, 3-j, 3-3j,
1+3j, 1+j, 1-j, 1-3j,
-1+3j, -1+j, -1-j, -1-3j,
-3+3j, -3+j, -3-j, -3-3j.

It can be seen that within the complex plane or two-dimensional plane (also known as the complex signal space or two-dimensional signal space) defined by the range of -3 to 3 in the real part and the range of -3 to 3 in the imaginary part, the constellation points of the 16QAM are relatively evenly distributed.

The complex plane and the two-dimensional plane are equivalent, so the complex plane or two-dimensional plane can sometimes be referred to as the two-dimensional complex plane. The real part of a complex number corresponds to the x-coordinate of the two-dimensional plane, and the imaginary part of a complex number corresponds to the y-coordinate. Thus, a complex number can also be represented by a point on the two-dimensional plane, that is, a complex number a+j*b can be represented by a point with coordinates (a, b) on the two-dimensional plane. Coordinates (a, b) indicate an x-coordinate of a and a y-coordinate of b on the two-dimensional plane. Therefore, the 16 points in the constellation diagram of the 16QAM can be represented not only by 16 complex numbers but also by 16 coordinates on the two-dimensional plane, which are represented in the forms as follows:

(3,3), (3,1), (3,-1), (3,-3),
(1,3), (1,1), (1,-1), (1,-3),
(-1,3), (-1,1), (-1,-1), (-1,-3),
(-3,3), (-3,1), (-3,-1), (-3,-3).

Of course, sometimes for power normalization, the constellation diagram may have an overall power normalization, that is, all the points of the constellation diagram may be multiplied by a normalization factor, for example, the 16 complex numbers of the 16QAM may all be multiplied by the same normalization factor 1/sqrt(40). The constellation diagram of the 16QAM after normalization includes 16 points represented by complex numbers as follows:
1/sqrt(40)*[3+3j,3+j, 3-j,3-3j, 1+3j,1+j, 1-j,1-3j, -1+3j,-1+j, -1-j,-1-3j, -3+3j,-3+j, -3-j,-3-3j]].

The coordinates corresponding to the 16 points in the normalized 16QAM constellation diagram are obtained by multiplying the above 16 two-dimensional coordinates by 1/sqrt(40) (both the x-coordinate and y-coordinate of each two-dimensional coordinate are multiplied by 1/sqrt(40)). Normalization will only cause an overall shrinking of the constellation diagram, and the constellation points inside the shrunk constellation diagram are still relatively evenly distributed.

Other digital amplitude-phase modulation schemes, such as 32QAM, 64QAM, and 256QAM, are similar to 16QAM, with constellation points that are relatively evenly distributed. Therefore, conventional high-order modulation schemes can make full use of the two-dimensional signal space of complex signals. Furthermore, these high-order modulation schemes enable the use of simple and performance-assured demodulation schemes, thus enabling to approach the transmission performance limit, namely the Shannon limit, in a relatively simple and efficient manner. Hence, these high-order modulation schemes are widely applied in scenarios requiring high spectral efficiency.

However, these high-order modulation schemes have a problem: if the modulated symbols are altered or distorted during transmission, the demodulation performance will severely deteriorate.

Take the transmission of modulated symbols via OFDM as an example, where modulated symbols are transmitted through OFDM subcarriers:

After passing through a multipath channel, also known as a frequency-selective channel, the modulated symbols carried on the subcarriers will be weighted by a complex weight value, that is, the modulated symbols carried on the subcarriers will be distorted by the frequency-selective channel.

If there is synchronization error between the transmitter and receiver, then timing deviation (i.e., time offset) and frequency deviation (i.e., frequency offset) will also cause the modulated symbols on the subcarriers to be weighted by a complex weight value, that is, the modulated symbols will be distorted by synchronization errors.

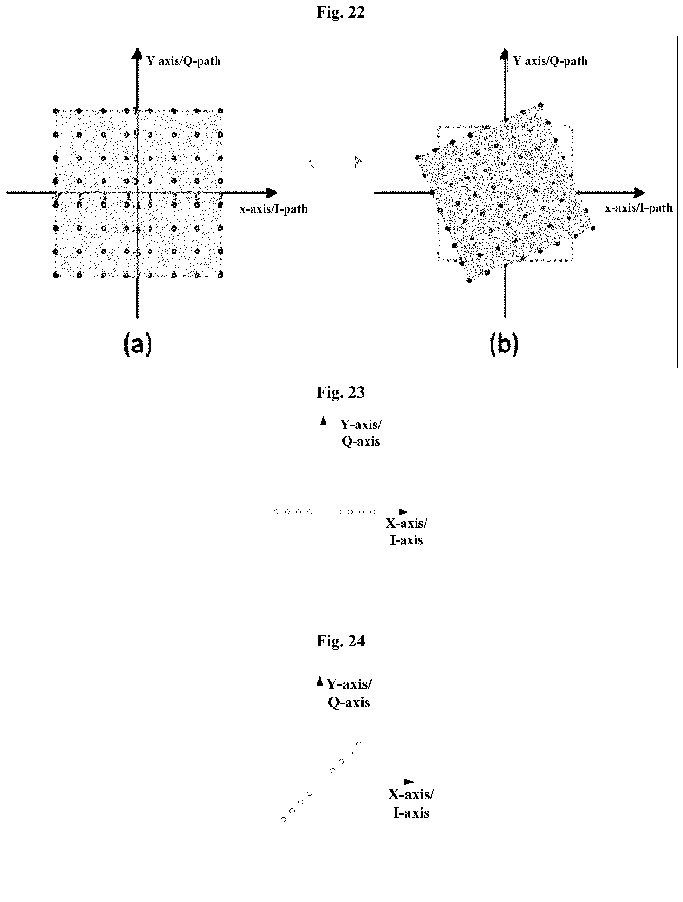

These distortions experienced by the modulated symbols will superimpose. Taking the transmission of modulated symbol s via OFDM as an example, assuming that the complex weight value on the modulated symbol s caused by the frequency-selective channel is g1, and the complex weight value on the modulated symbol s caused by time-frequency or frequency offset is g2, if both frequency-selective channel and synchronization error exist simultaneously, there will be a weight value h equal to g1*g2 on the modulated symbol, that is, the received symbol is y=h*s + n = g1*g2*s +n, where n is Additive White Gaussian Noise (AWGN). If the receiver cannot remove the distortions on the modulated symbols, that is, if the receiver cannot equalize the complex weight value h on the modulated symbols, then the modulated symbols will undergo rotation and scaling. Even a small amount of rotation and scaling can severely limit the performance of high-order modulation schemes. For example, as shown in Fig. 22, each small circle corresponds to a modulated symbol. Fig. 22(a) shows the constellation situation corresponding to the standard 64QAM modulation; while Fig. 22(b) shows the constellation situation of 64QAM modulation symbols after experiencing a complex weight value (i.e., a rotation and scaling quantity), that is, the constellation situation of 64QAM modulation symbols after experiencing channel distortion. If the receiver directly demodulates the rotated and scaled constellation diagram as shown in Fig. 22(b), even if the AWGN on the receiver is very small, the demodulation performance will be poor.

Therefore, conventional high-spectral efficiency scenarios heavily rely on pilots/reference signals to estimate the complex weight value (i.e., distortion) on the modulated symbols, that is, h in the received data symbols y=h*s + n needs to be estimated and then equalized, that is, y needs to be divided by h (y/h =s +n/h), so as to obtain a constellation diagram s+n' from which the distortion has been removed and which is only affected by AWGN, thereby achieving good demodulation performance, where n' = n/h.

On the other hand, applying the aforementioned ultra-sparse pilot scheme can allow the system to support more users, making it highly suitable for scenarios with a large number of connections, such as massive direct user data transmission in an unconnected state, and massive user data transmission based on Semi-Persistent Scheduling (SPS), both of which can utilize the ultra-sparse pilot scheme. However, the ultra-sparse pilot scheme requires the receiver to estimate the channel based on the characteristics of the data symbols themselves, but the constellation diagrams of conventional high-order modulation are too dense, which is not conducive to the CPU extracting channel information from the data symbols. Therefore, the embodiments of the present disclosure propose a modulation method that can support high spectral efficiency and also allow the CPU or Access Point (AP) to more easily and accurately extract channel information from the data symbols.

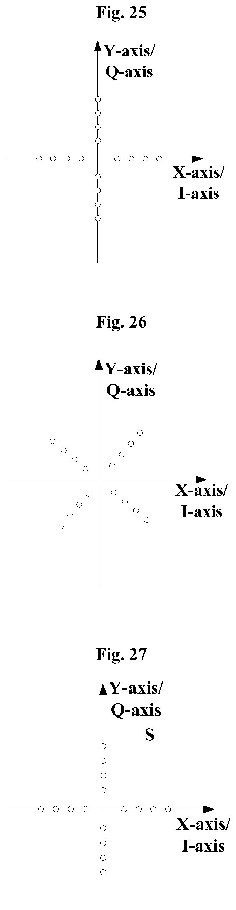

The modulation scheme of the embodiments of the present disclosure can employ the PAM constellation diagrams shown in Fig. 23-23, and the cross-shaped constellation diagram shown in Fig. 25-25. The so-called cross-shaped constellation diagram refers to a constellation diagram in which half of the constellation points are on a straight line passing through the origin (zero point), and the other half of the constellation points are on another straight line passing through the origin, with the two lines being perpendicular to each other. Specifically, Figs. 24-25 show a 16-point cross-shaped constellation diagram in a two-dimensional signal plane, where each constellation point corresponds to one modulation symbol, and each modulation symbol can carry 4 bits, meaning that 4 bits will be mapped to (modulated as) one modulation symbol. Fig. 25 is a constellation diagram with constellation points on the x-axis (I-path) and y-axis (Q-path). Fig. 26 is a constellation diagram with constellation points on the straight line at 45° to the origin and the straight line at 135° to the origin. The constellation diagram in Fig. 26 can be obtained by rotating Fig. 24 by 45°. The PAM constellation diagram can also be considered a linear constellation diagram, with all constellation points on a straight line passing through the origin (zero point).

In detail, each modulation symbol (and thus each constellation point) can carry multiple bits; in Figs. 23-25, each modulation symbol can carry 4 bits, which means high-order modulation can be achieved, leading to high spectral efficiency.

Both the linear constellation diagram and the cross-shaped constellation diagram corresponding to the modulation symbols have simple geometric shapes. Even if the received modulation symbols have undergone channel rotation and scaling, the constellation diagrams corresponding to these modulation symbols are merely a rotated and scaled linear constellation diagram and a rotated and scaled cross-shaped constellation diagram, with the geometric shapes remaining relatively simple. Since the linear constellation diagram is the simplest constellation diagram, the slightly more complex cross-shaped constellation diagram will be used as an example for illustration, with the handling of the linear constellation diagram typically being even simpler than that of the cross-shaped constellation diagram.

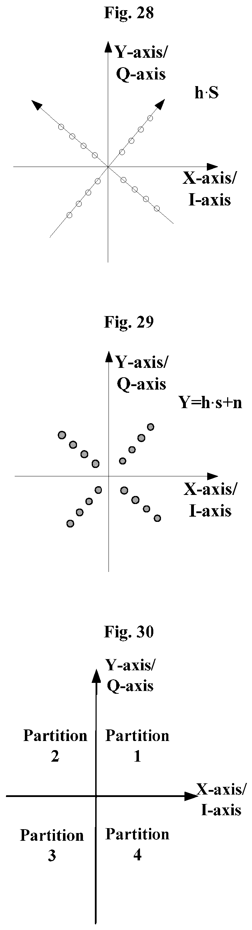

The cross-shaped constellation diagram after channel rotation and scaling is shown in Fig. 27. Fig. 27 is a standard constellation diagram of the transmitted modulation symbol s, and Fig. 28 is a constellation diagram of the received rotated and scaled modulation symbol h*s (i.e., h multiplied by s, or represented as $h \cdot s$ or hs), where the rotation and scaling factor is the complex number h. Note that the constellation diagram in Fig. 27 is a constellation diagram of the received modulation symbol without AWGN. A constellation diagram corresponding to the received modulation symbol with AWGN is shown in Fig. 29. Fig. 29 is actually obtained by adding a complex number corresponding to AWGN to the constellation points in Fig. 28, meaning that constellation points corresponding to the received modulation symbol $h \cdot s + n$ with AWGN are located surrounding the constellation points $h \cdot s$ in Fig. 28, and are distributed according to the probability density function of AWGN. In Fig. 29, the cluster of points with colors gradient from dark in the center to light at the edges represents the collection of points formed by the modulation symbol at the center of the cluster being affected by AWGN. From Fig. 29, it can also be seen that even with AWGN, the constellation diagram corresponding to the received modulation symbol can still maintain a cross shape. Therefore, the receiver can use the geometric shape of the constellation diagram, such as that in Fig. 29, to estimate the rotation and scaling factor applied to the constellation diagram, in other words, to estimate h. An embodiment of the present disclosure provides the following implementation solution.

First, the two-dimensional plane or two-dimensional signal plane is divided into 4 partitions. For example, two typical methods of dividing the two-dimensional signal plane into 4 partitions are as follows.

The first method uses the four quadrants of the two-dimensional signal plane as the 4 partitions, i.e., divides the two-dimensional signal plane into the 4 partitions by using the x-axis and y-axis as partition lines. As shown in Fig. 30, the slanted line fill represents Partition 1, the fine dot fill represents Partition 2, the vertical line fill represents Partition 3, and the brick-like fill represents Partition 4.

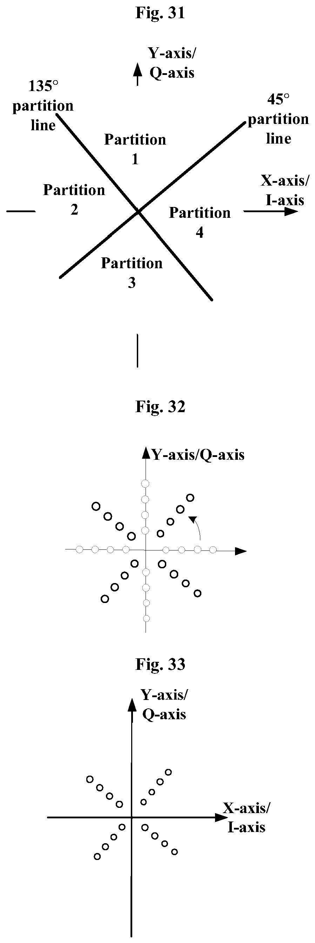

The second method involves rotating the 4 partitions obtained from the first method by 45° to obtain the desired 4 partitions, as shown in Fig. 31. That is: the area between the 45° ray starting from the origin and the 135° ray starting from the origin is Partition 1, filled with slanted lines; the area between the 135° ray starting from the origin and the 225° ray starting from the origin is Partition 2, filled with fine dots; the area between the 225° ray starting from the origin and the 315° ray starting from the origin is Partition 3, filled with vertical lines; and the area between the 315° ray starting from the origin and the 45° ray starting from the origin is Partition 4, filled with a brick pattern.

In addition to the two partitioning methods shown in Figs. 30-30, other methods that divide the two-dimensional plane into 4 partitions are also possible. However, when using the two partitioning methods shown in Figs. 30-30, determining which partition a constellation point belongs to can be done simply by performing some basic addition and subtraction on the coordinates of the constellation point, without the need for more complex multiplication operations, thus making the implementation simpler.

After the receiver divides the two-dimensional signal plane into 4 partitions, the receiver sums up the constellation points (each constellation point corresponding to one modulation symbol) in each partition and then divides the sum by the number of constellation points (i.e., the number of modulation symbols) in that partition. The resulting constellation point is the center of the constellation points in that partition. Fig. 32 is a schematic diagram of a constellation diagram after rotation and scaling the cross-shaped schematic diagram of Fig. 27. Taking the partitioning method shown in Fig. 30 as an example, after partitioning, the constellation points are divided into 4 parts, as shown in Fig. 33, and then the following operations are performed:

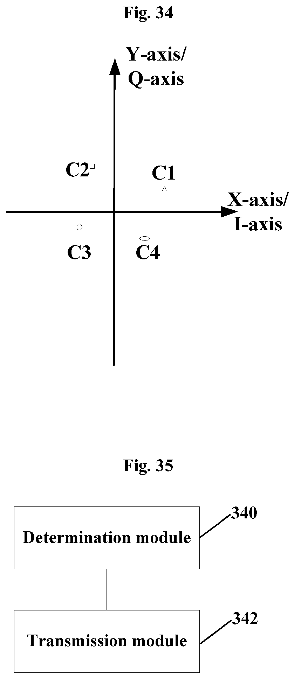

Summing up the constellation points in Partition 1 and dividing the sum by the number of constellation points in that partition to obtain a center of the constellation points in Partition 1, denoted as c1 in Fig. 34;
Summing up the constellation points in Partition 2 and dividing the sum by the number of constellation points in that partition to obtain the center of the constellation points in Partition 2, denoted as c2 in Fig. 34;
Summing up the constellation points in Partition 3 and dividing the sum by the number of constellation points in that partition to obtain the center of the constellation points in Partition 3, denoted as c3 in Fig. 34.
Summing up the constellation points in Partition 4 and dividing the sum by the number of constellation points in that partition to obtain the center of the constellation points in Partition 4, denoted as c4 in Fig. 34.

Then, a rotation and scaling factor of the entire constellation diagram can be estimated according to the center of the constellation points in each partition. For example, taking the first partition method, i.e., Fig. 26, as an example, assuming that the calculated centers of the 4 partitions are c1, c2, c3, c4 respectively, then:

The center of Partition 2, c2, is rotated clockwise by 90° to obtain c2', i.e., c2' = -c2*j;
The center of Partition 3 is rotated clockwise by 180° to obtain c3', i.e., c3' = -c3;
The center of Partition 4 is rotated counterclockwise by 90° to obtain c4', i.e., c4' = c4*j;

Then by calculating c = (c1+c2'+c3'+c4')/4, the resulting complex number c can be used as an estimate of the rotation and scaling factor for the entire constellation diagram.

When AWGN is present, some modulation symbols may experience significant AWGN and may cross their original partition. To more accurately estimate the rotation and scaling factor, the two partitioning methods mentioned above are typically used, and the rotation and scaling factor for the constellation diagram is calculated under each partition method separately, and the rotation and scaling factor with the larger modulus is taken as the rotation and scaling factor for the constellation diagram.

For linear constellation diagrams like those in Fig. 25 or Fig. 26, only two partitions are needed to calculate the rotation and scaling factor of the constellation diagram. For example, by dividing the two-dimensional signal plane into two partitions with the x-axis as the partition line, the constellation points (each constellation point corresponding to one modulation symbol) within each partition are summed up and the sum is then divided by the number of constellation points in that partition (i.e., the number of modulation symbols). The resulting constellation point is the center of the constellation points in that partition. Then, the rotation and scaling factor of the entire constellation diagram can be determined according to the centers of all partitions. Suppose the center of the partition on the right side of the x-axis (i.e., x >= 0) is denoted as c1, and the center of the partition on the right side of the x-axis (i.e., x < 0) is denoted as c2. Then, the center c2 is rotated clockwise by 90° to obtain c2', which is c2' = -c2.

Then, by calculating c=(c1+c2')/2, the resulting complex number c can be used as an estimate of the rotation and scaling factor of the entire constellation diagram.

Four different two-partition division methods are used to calculate four rotation and scaling factors, and the one with the largest modulus value in the four rotation and scaling factors is taken as the rotation and scaling factor of the constellation diagram.

1) Dividing the two-dimensional signal plane into two partitions with the x-axis as the partition line;
2) Dividing the two-dimensional signal plane into two partitions with the y-axis as the partition line;
3) Dividing the two-dimensional signal plane into two partitions with a 45° line passing through the origin as the partition line;
4) Dividing the two-dimensional signal plane into two partitions with a 135° line passing through the origin as the partition line.

After the receiver estimates the rotation and scaling factor of the constellation diagram, the receiver is able to compensate for the rotation and scaling experienced by the constellation diagram, so as to obtain a constellation diagram that is only affected by AWGN without distortion.

Cell-free networks are emerging mobile network forms and are an important technical direction for enhancing mobile communication experience in the future, and are currently receiving increasing attention. The above embodiments of the present disclosure solve the performance issues of multi-user uplink transmission in cell-free networks.

Through the description of the foregoing embodiments, those having ordinary skill in the art may clearly understand that the information transmission method according to the foregoing embodiments may be implemented by software in addition to a necessary universal hardware platform, and definitely may also be implemented by hardware. However, in many cases, the former is a preferred implementation. Based on such understanding, the essence of the technical solutions of the present disclosure or the part contributing to the related art may be embodied in the form of a software product. The computer software product may be stored in a storage medium (such as a Read-Only Memory (ROM)/Random Access Memory (RAM), a magnetic disk, and an optical disk), and includes several instructions for instructing a second node device (which may be a mobile phone), a computer, a server, a network device, or the like.

The embodiments of the present disclosure further provide an information transmission apparatus, which is configured to implement the described embodiments and exemplary implementations, and what has been described will not be elaborated. The term "module", as used hereinafter, is a combination of software and/or hardware capable of realizing a predetermined function. Although the apparatus described in the following embodiments is preferably implemented by software, implementation of hardware or a combination of software and hardware is also possible and conceived.

Fig. 35 is a structural block diagram of an information transmission apparatus according to an embodiment of the present disclosure. As shown in Fig. 35, the information transmission apparatus includes:

a determination module 340, configured to determine W ultra-sparse pilots, wherein W is an integer greater than 0; and

a transmission module 342, configured to transmit the W ultra-sparse pilots and target information to a cell-free system.

By means of the technical solution, W determined ultra-sparse pilots may be sent together with target information to a cell-free system. The problem of lacking appropriate pilot signals in a cell-free system in the related art may be solved. By virtue of the solution provided in the embodiments of the present disclosure, appropriate W ultra-sparse pilots may be sent to the cell-free system for the use by the cell-free system.

In an exemplary embodiment, the target information includes at least one of: User Equipment Identifier (UE_ID) information, User Equipment (UE) type information, UE capability information, a number of transmission antennas and reception antennas of a UE, a number of transmission data streams supported by the UE, one or more Access Point Identifier (AP_ID) information, a Scheduling Request (SR), a Buffer Status Report (BSR), and location information of the UE.

In an exemplary embodiment, in a case where the target information includes the CSI, the CSI includes at least one of: a pre-coding matrix indication; a channel quality indicator; a rank indication; a Synchronization Signal and Physical Broadcast Channel Block (SSB) resource indication; or a reference signal power.

After the cell-free system receives the target information, the target information may assist in better access, scheduling, multi-user pairing, paging, UE mobility management, and other applications of the cell-free system, as well as facilitate the conduction of perception applications of the cell-free system.

For instance, when ultra-sparse pilots are transmitted to the cell-free system together with information containing the UE_ID, they can be used for performing random access. In other words, "ultra-sparse pilots plus information containing the UE_ID" may be used as a Msg1 of a random access channel (e.g., a Random Access Channel (RACH) or a Physical Random Access Channel (PRACH)).

In a cell-free system, continuing with the conventional random access method may pose significant challenges because the Msg1 of the conventional random access method is based on Zadoff-Chu (ZC) sequences. If a 4-step RACH is adopted, then the Msg1 only contains one ZC sequence. If a 2-step RACH is adopted, then the Msg1 contains one ZC sequence and one data packet.

However, if the AP is required to detect the ZC sequence contained in the Msg1 and perform channel estimation based on the ZC sequence contained in the Msg1, the processing complexity on the AP would increase significantly, raising the cost and power consumption of the AP. On the other hand, if the AP does not process the Msg1 and instead forward the Msg1 to the CPU via radio stripe front haul, data of all APs would need to be separately transmitted to the CPU, meaning that in a case of M APs, information of M Msg1s would need to be transmitted on the radio stripe front haul. If the number M of the APs is large, transmitting the Msg1s would require a considerable bandwidth on the radio stripe front haul. Moreover, the Msg1s of a large number of APs are transmitted back to the CPU, and this would require the CPU to process all Msg1s in a short time, which is a significant burden on the CPU.

In the embodiments of the present disclosure, a combination of the ultra-sparse pilots and the information containing the UE_ID serves as the Msg1 of the RACH or PRACH, this allows APs to continue with their simple channel estimation and space domain MRC combining operations, maintaining simple implementation and low power consumption of the AP, the requirement on the bandwidth of the radio stripe front haul does not need to increase significantly, and the CPU does not need to add too much processing complexity for the Msg1s.

In another embodiment, when ultra-sparse pilots are transmitted together with information containing the UE_ID, they can serve as a "heartbeat signal" sent by a UE in the cell-free system. This aids the cell-free system in more easily achieving AP energy saving, UE mobility management, pilot allocation, paging, and other functions.

In another embodiment, when ultra-sparse pilots are transmitted together with information containing the UE capability information, they can be used by the system to conduct transmission matching the UE capabilities.

In another embodiment, when ultra-sparse pilots are transmitted together with information containing the UE_ID and the BSR, they can assist in achieving low signaling overhead and low latency for UE uplink transmission. When a UE has uplink data to transmit, the UE can directly send "ultra-sparse pilots plus information containing UE_ID and BSR" to the cell-free system, such that the cell-free system can directly allocate uplink transmission resources to the UE, allowing the UE to transmit its data.

In another embodiment, when ultra-sparse pilots are transmitted together with location information of a UE, they can assist the cell-free system in achieving AP energy saving, UE mobility management, pilot allocation, paging, sensing, and other functions.

In another embodiment, when ultra-sparse pilots are transmitted together with one or more pieces of AP_ID information, they can assist the cell-free system in achieving AP energy saving, UE mobility management, pilot allocation, paging, sensing, and other functions.

In an exemplary embodiment, the transmission module is further configured to transmit the W ultra-sparse pilots and the target information to the cell-free system when the UE is in an unconnected state.

In an exemplary embodiment, only U symbols in each ultra-sparse pilot of the W ultra-sparse pilots take non-zero values, and the U non-zero values are carried on U resource elements adjacent in a time-frequency domain, or carried on U symbols in sequence in a time domain, or carried on U resource elements on adjacent sub-carriers in a frequency domain, wherein U is greater than 0 and less than 5.

In an exemplary embodiment, a length of each ultra-sparse pilot of the W ultra-sparse pilots is greater than 24.

In an exemplary embodiment, U=1.

In an exemplary embodiment, U=2, and the non-zero values [p1,p2] include: [a1, a2], or [b1, b2], wherein [a1, a2] is orthogonal to [b1, b2],

In an exemplary embodiment, U=2, and the non-zero values [p1,p2] take at least one of the following sets of values: [p1,p2]=[1,1]; [p1,p2]=[1,-1]; [p1,p2]=[1,j]; [p1,p2]=[1,-j].

In an exemplary embodiment, U=4, and the non-zero values [p1,p2,p3,p4] take at least one of the following sets of values:

[p1,p2,p3,p4]=[a1,a2,a3,a4]; [p1,p2,p3,p4]=[b1,b2,b3,b4]; [p1,p2,p3,p4]=[c1,c2,c3,c4]; [p1,p2,p3,p4]=[d1,d2,d3,d4]; wherein [a1,a2,a3,a4], [b1,b2,b3,b4], [c1,c2,c3,c4], [d1,d2,d3,d4] are orthogonal to each other.

In an exemplary embodiment, in a case where W is greater than 1, the W ultra-sparse pilots are independent of each other.

In an exemplary embodiment, the W ultra-sparse pilots are determined according to information in a transmitted data packet.

In an exemplary embodiment, the W ultra-sparse pilots are determined according to one or more bits in the transmitted data packet.

In an exemplary embodiment, each ultra-sparse pilot of the W ultra-sparse pilots is from a pilot set containing D ultra-sparse pilots, and each ultra-sparse pilot of the W ultra-sparse pilots is determined from the pilot set by log2(D) bits in a transmitted data packet.

In an exemplary embodiment, W is equal to 2 or 1.

It should be noted that each module may be implemented by software or hardware. The latter may be implemented in the following manner, but is not limited thereto. All the modules are located in a same processor; alternatively, the modules are located in different processors in an arbitrary combination.

The embodiments of the present disclosure also provide a computer readable storage medium. The computer readable storage medium stores a computer program, wherein the computer program is configured to execute the operations in any one of the described method embodiments during running.

In an exemplary embodiment, the computer readable storage medium may include, but is not limited to, any medium that can store a computer program, such as a USB flash drive, a Read-Only Memory (ROM), a Random Access Memory (RAM), a removable hard disk, a magnetic disk, or an optical disc.

The embodiments of the present disclosure further provide an electronic apparatus, including a memory and a processor. The memory stores a computer program. The processor is configured to run the computer program to execute operations in any one of the method embodiments.

In an exemplary embodiment, the electronic apparatus may further include a transmission device and an input/output device, wherein the transmission device is connected to the processor, and the input/output device is connected to the processor.

For specific examples in this embodiment, reference may be made to the examples described in the foregoing embodiments and exemplary embodiments, and details are not repeatedly described in this embodiment.

Obviously, those having ordinary skill in the art should understand that each module or each operation of the present disclosure can be implemented by a universal computing device, they may be centralized on a single computing device or distributed on a network composed of a plurality of computing devices, they can be implemented by program codes executable by a computing apparatus, and thus can be stored in a storage apparatus and executed by the computing apparatus. Furthermore, in some cases, the shown or described operations may be executed in an order different from that described here, or they are made into integrated circuit modules respectively, or a plurality of modules or operations therein are made into a single integrated circuit module for implementation. As such, the present disclosure is not limited to any particular hardware and software combination.

The foregoing descriptions are merely exemplary embodiments of the present disclosure, but are not intended to limit the present disclosure. For those having ordinary skill in the art, the present disclosure may have various modifications and variations. Any modifications, equivalent replacements, improvements and the like made within the principle of the present disclosure shall fall within the scope of protection of the present disclosure.

**Claims**

1. An information transmission method applied to a User Equipment, UE, the information transmission method comprising:

   determining W ultra-sparse pilots, wherein W is an integer greater than 0; and
   transmitting the W ultra-sparse pilots and target information to a cell-free system.

2. The information transmission method according to claim 1, wherein
   the target information comprises at least one of: UE Identifier, UE_ID, information, UE type information, UE capability information, a number of transmission antennas and reception antennas of the UE, a number of transmission data streams supported by the UE, a Scheduling Request, SR, a Buffer Status Report, BSR, location information of the UE, one or more pieces of Access Point Identifier, AP_ID, information, or Channel State Information, CSI, about one or more Access Points, APs, to the UE.

3. The information transmission method according to claim 2, wherein in a case where the target information comprises the CSI, the CSI comprises at least one of:

   a pre-coding matrix indication;
   a channel quality indicator;
   a rank indication;
   a Synchronization Signal and Physical Broadcast Channel Block, SSB, resource indication; or
   a reference signal power.

4. The information transmission method according to claim 1, wherein
   only U symbols in each ultra-sparse pilot of the W ultra-sparse pilots take non-zero values, and the U non-zero values are carried on U resource elements adjacent in a time-frequency domain, or carried on U symbols in sequence in a time domain, or carried on U resource elements on adjacent sub-carriers in a frequency domain, wherein U is greater than 0 and less than 5.

5. The information transmission method according to claim 4, wherein
   a length of each ultra-sparse pilot of the W ultra-sparse pilots is greater than 24.

6. The information transmission method according to claim 4, wherein

$$U=1.$$

7. The information transmission method according to claim 4, wherein
   U=2, and the non-zero values [p1,p2] comprise: [a1, a2], or [b1, b2], wherein [a1, a2] is orthogonal to [b1, b2].

8. The information transmission method according to claim 4, wherein
   U=2, and the non-zero values [p1,p2] take at least one of the following sets of values:

$$[p1,p2]=[1,1];$$

$$[p1,p2]=[1,-1];$$

$$[p1,p2]=[1,j];$$

$$[p1,p2]=[1,-j].$$

9. The information transmission method according to claim 4, wherein

   U=4, and the non-zero values [p1,p2,p3,p4] take at least one of the following sets of values:

$$[p1,p2,p3,p4]=[a1,a2,a3,a4];$$

$$[p1,p2,p3,p4]=[b1,b2,b3,b4];$$

$$[p1,p2,p3,p4]=[c1,c2,c3,c4];$$

[p1,p2,p3,p4]=[d1,d2,d3,d4]; wherein [a1,a2,a3,a4], [b1,b2,b3,b4], [c1,c2,c3,c4], [d1,d2,d3,d4] are orthogonal to each other.

10. The information transmission method according to claim 1, wherein
in a case where W is greater than 1, the W ultra-sparse pilots are independent of each other.

11. The information transmission method according to claim 1, wherein
the W ultra-sparse pilots are determined according to information in a transmitted data packet.

12. The information transmission method according to claim 11, wherein
the W ultra-sparse pilots are determined according to one or more bits in the transmitted data packet.

13. The information transmission method according to claim 1, wherein
each ultra-sparse pilot of the W ultra-sparse pilots is from a pilot set containing D ultra-sparse pilots, and each ultra-sparse pilot of the W ultra-sparse pilots is determined from the pilot set by log2(D) bits in a transmitted data packet.

14. The information transmission method according to claim 1, wherein
W is equal to 2 or 1.

15. An information transmission apparatus, comprising:

a determination module, configured to determine W ultra-sparse pilots, wherein W is an integer greater than 0; and
a transmission module, configured to transmit the W ultra-sparse pilots and target information to a cell-free system.

16. A computer readable storage medium, wherein the computer readable storage medium stores a computer program, and the computer program is configured to execute the information transmission method according to any one of claims 1 to 14 when running.

17. An electronic apparatus, comprising a memory and a processor, wherein the memory stores a computer program, and the processor is configured to run the computer program so as to execute the information transmission method according to any one of claims 1 to 14.

**Fig. 1**

CPU

0  1  2 ............................................ N-1

AP

UE

**Fig. 2**

CPU

0  1  2 ...................  ................... N-1

AP

UE

**Fig. 3**

Input/output device
108

Transmission
device 106

Processor 102

Memory
104

**Fig. 4**

Determining W ultra-sparse pilots, wherein W is an integer greater than 0 — S402

Transmitting the W ultra-sparse pilots and target information to a cell-free system — S404

Fig. 5

Fig. 6

EP 4 601 232 A1

**Fig. 7**

|1|1|  |1|-1|  |1|1|  |1|-1|
|1|1|  |1|-1|  |-1|-1|  |-1|1|

**Fig. 8**

**Fig. 9**

**Fig. 10**

8

9

25

**Fig. 11**

1st PRB

2nd PRB

Xth PRB

**Fig. 12**

## Fig. 13

**Fig. 14**

**Fig. 15**

1st PRB

2nd PRB

Xth PRB

**Fig. 16**

Port 1    Port 2                                                    Port X*12

X*12 ultra-sparse pilots

**Fig. 17**

Port 1  Port 2  Port 3  Port 4  Port X*12-1  Port X*12

X*12 ultra-sparse pilot ports

**Fig. 18**

OCC code 1  OCC code 2

**Fig. 19**

1st PRB

2nd PRB

Xth PRB

## Fig. 20

| Port 1 | Port 2 | Port 3 | Port 4 | Port 5 | Port 6 | Port 7 | Port 8 | ... | Port X*24-1 | Port X*24 |

X*24 ultra-sparse pilot ports

## Fig. 21

P1 | P2 | ■ ■ ■ ■ ■ ■ | PW | Data packet

**Fig. 22**

**(a)**

**(b)**

**Fig. 23**

**Fig. 24**

**Fig. 25**

Y-axis/
Q-axis

X-axis/
I-axis

**Fig. 26**

Y-axis/
Q-axis

X-axis/
I-axis

**Fig. 27**

Y-axis/
Q-axis
S

X-axis/
I-axis

Fig. 28

Y-axis/
Q-axis

h·S

X-axis/
I-axis

Fig. 29

Y-axis/
Q-axis

Y=h·s+n

X-axis/
I-axis

Fig. 30

Y-axis/
Q-axis

Partition
2

Partition
1

X-axis/
I-axis

Partition
3

Partition
4

Fig. 31

Fig. 32

Fig. 33

**Fig. 34**

Y-axis/
Q-axis

C2□

C1
△

X-axis/
I-axis

○
C3

○
C4

**Fig. 35**

Determination module    340

Transmission module    342

## INTERNATIONAL SEARCH REPORT

| International application No. |
| --- |
| **PCT/CN2023/134475** |

### A.   CLASSIFICATION OF SUBJECT MATTER

H04L 5/00(2006.01)i;  H04L 1/06(2006.01)i;  H04B 7/0456(2017.01)i

According to International Patent Classification (IPC) or to both national classification and IPC

### B.   FIELDS SEARCHED

Minimum documentation searched (classification system followed by classification symbols)

IPC:H04L H04B

Documentation searched other than minimum documentation to the extent that such documents are included in the fields searched

Electronic data base consulted during the international search (name of data base and, where practicable, search terms used)

CNABS; CNTXT; CNKI; VEN; ENTXTC; USTXT; EPTXT; WOTXT; 3GPP: 无小区, 去小区, 分配, 配置, 合适, 导频, 极稀疏, 信道状态信息, 预编码矩阵指示, 信道质量指示, 秩指示, SSB资源指示, 参考信号功率, cell-free, allocation, configuration, suitable, pilot, sparse, channel state information, precoding matrix indication, channel quality indication, rank indication, SSB resource indication, reference signal power

### C.   DOCUMENTS CONSIDERED TO BE RELEVANT

| Category* | Citation of document, with indication, where appropriate, of the relevant passages | Relevant to claim No. |
| --- | --- | --- |
| A | CN 115065389 A (NANJING UNIVERSITY OF POSTS AND TELECOMMUNICATIONS) 16 September 2022 (2022-09-16) description, paragraphs [0017]-[0037] | 1-17 |
| A | CN 113852453 A (HANGZHOU DIANZI UNIVERSITY) 28 December 2021 (2021-12-28) entire document | 1-17 |
| A | US 2022140920 A1 (ELECTRONICS AND TELECOMMUNICATIONS RESEARCH INSTITUTE) 05 May 2022 (2022-05-05) entire document | 1-17 |
| A | WO 2022004910 A1 (SAMSUNG ELECTRONICS CO., LTD. et al.) 06 January 2022 (2022-01-06) entire document | 1-17 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **18 January 2024** | **12 February 2024** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

| International application No. |
| --- |
| **PCT/CN2023/134475** |

| Patent document cited in search report | | | Publication date (day/month/year) | Patent family member(s) | | | Publication date (day/month/year) |
| --- | --- | --- | --- | --- | --- | --- | --- |
| CN | 115065389 | A | 16 September 2022 | None | | | |
| CN | 113852453 | A | 28 December 2021 | None | | | |
| US | 2022140920 | A1 | 05 May 2022 | US | 11431422 | B2 | 30 August 2022 |
| WO | 2022004910 | A1 | 06 January 2022 | KR | 20230028239 | A | 28 February 2023 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211521114